# EUROPEAN PATENT APPLICATION

(11) **EP 4 362 535 A1**
(43) Date of publication of application: **01.05.2024**
(21) Application number: 22848386.3
(22) Date of filing: 21.07.2022
(51) Int. Cl.: H04W 24/02, H04L 1/18, H04L 5/00

(54) **METHOD AND DEVICE USED IN NODE FOR WIRELESS COMMUNICATION**

(30) Priority: 28.07.2021 CN 202110854261
(71) Applicant: SHANGHAI LANGBO COMMUNICATION TECHNOLOGY COMPANY LIMITED, Shanghai 200240 (CN)
(72) Inventor: HU, Yang, Shanghai 201206 (CN); ZHANG, Xiaobo, Shanghai 201206 (CN)
(74) Representative: Zhang, Fan
(86) International application number: PCT/CN2022/106952
(87) International publication number: WO 2023/005781

(57) **Abstract**

The present application discloses a method and device used in a node for wireless communication. A first receiver receives first signaling, wherein the first signaling is used for determining a first period value and M1 candidate HARQ process numbers, and any one of the M1 candidate HARQ process numbers a non-negative integer. A first transceiver receives a first bit block in a first time unit or transmits the first bit block in the first time unit, wherein the first time unit is one of M2 candidate time units; the first bit block is associated with a first HARQ process number; the first HARQ process number is one of the M1 candidate HARQ process numbers; a first numerical value and a second numerical value are together used for determining the first HARQ process number from the M1 candidate HARQ process numbers; the first period value and M2 are together used for determining the first numerical value; and the index of the first time unit and a target numerical value are together used for determining the second numerical value.

## Description

### TECHNICAL FIELD

The present application relates to transmission methods and devices in wireless communication systems, and in particular to a method and device for radio signal transmission in a wireless communication system supporting cellular networks.

### BACKGROUND

Extended Reality (XR) has been considered as a very potential technique, so that to promote the status and development of XR mass application will become one of the typical applications of the future communications; and the support provided for XR traffics is an important aspect of system designing in 5G New Radio (NR). XR traffics are featured with quasi-periodic traffic model, high data rate and low-latency request; the configured assignment technique (for instance, Semi-persistent scheduling (SPS) or configured grant (CG)) in the existing technical specifications for the 3GPP NR is highly potential in matching with these three major features of XR traffics.

### SUMMARY

The configured assignment technique in the existing technical specifications for the 3 GPP NR only supports a transmission of no more than two Transport Blocks (TBs) in each SPS (or CG) period. Introducing the function that configures multiple physical layer channels in each SPS (or CG) period for transmitting more TBs is a better way of matching with features of XR traffics, which helps the NR system in supporting XR traffics; after the introduction of the function, how to determine a corresponding Hybrid Automatic Repeat reQuest (HARQ) Process ID for each configured assignment becomes a key problem that needs to be solved.

To address the above problem, the present application provides a solution. It should be noted that although the description above only took XR traffics in 5G NR as an example, the present application is also applicable to other scenarios, such as other scenarios of 5G NR other than XR, 6G networks and V2X, where similar technical effects can be achieved. Additionally, the adoption of a unified solution for various scenarios, including but not limited to 5G NR or 6G networks or V2X, contributes to the reduction of hardcore complexity and costs, or an enhancement in performance. It should be noted that if no conflict is incurred, embodiments in any node in the present application and the characteristics of the embodiments are also applicable to any other node, and vice versa. What's more, the embodiments in the present application and the characteristics in the embodiments can be arbitrarily combined if there is no conflict.

In one embodiment, interpretations of the terminology in the present application refer to definitions given in the 3GPP TS36 series.

In one embodiment, interpretations of the terminology in the present application refer to definitions given in the 3GPP TS38 series.

In one embodiment, interpretations of the terminology in the present application refer to definitions given in the 3GPP TS37 series.

In one embodiment, interpretations of the terminology in the present application refer to definitions given in Institute of Electrical and Electronics Engineers (IEEE) protocol specifications.

The present application provides a method in a first node for wireless communications, comprising:
receiving a first signaling, the first signaling used for determining a first periodic value and M1 candidate Hybrid Automatic Repeat reQuest (HARQ) Process IDs, M1 being greater than 1, the first periodic value being a length of period of a configured assignment, and any of the M1 candidate HARQ Process IDs being a non-negative integer; and
receiving a first bit block in a first time unit, or, transmitting a first bit block in a first time unit, the first time unit being one of M2 candidate time units, M2 being a positive integer greater than 1;
herein, the first bit block is associated with a first HARQ Process ID, the first HARQ Process ID being one of the M1 candidate HARQ Process IDs; a first value and a second value are used together to determine the first HARQ Process ID from the M1 candidate HARQ Process IDs; a time interval length between any two candidate time units among the M2 candidate time units is no larger than the first periodic value; the first periodic value and M2 are used together to determine the first value; an index of the first time unit and a target value are used together to determine the second value, and the target value is used to determine time-domain positions of the M2 candidate time units.

In one embodiment, a problem to be solved in the present application includes: how to determine a HARQ process ID associated with the first bit block.

In one embodiment, characteristics of the above method include: there are multiple configured assignments respectively corresponding to multiple different HARQ process IDs/numbers within a specific period; for any configured assignment of the multiple configured assignments, a first value and a second value are used together to determine a corresponding HARQ process ID, where the first value is unrelated to a time-domain position in the specific period, while the second value is related to a time-domain position in the specific period.

In one embodiment, characteristics of the above method include: there are multiple configured assignments respectively corresponding to multiple different HARQ process IDs/numbers within periods of each configured assignment.

In one embodiment, characteristics of the above method include: which one of the M1 candidate HARQ Process IDs is the first HARQ Process ID is related to a difference between the index of the first time unit and an index of a specific time unit.

In one embodiment, characteristics of the above method include: given the index of the first time unit, the target value used to determine time-domain positions of the M2 candidate time units is used to determine the first HARQ Process ID.

In one embodiment, characteristics of the above method include: in a length of period of an SPS (or CG) configuration there exists multiple PDSCHs (or PUSCHs) assigned by the SPS (or CG) configuration being respectively associated with multiple different HARQ process IDs/numbers determined by different time-domain positions.

In one embodiment, an advantage of the above method includes: helping transmit more Transport Blocks (TBs) in a length of period of a configured assignment, thus enhancing the data transmission rate.

In one embodiment, an advantage of the above method includes: making it possible to configure more candidate transmission occasions, which helps reduce delay.

In one embodiment, an advantage of the above method includes: maximizing the time interval between two configured assignments with a same HARQ process ID, which makes full use of the HARQ process.

In one embodiment, an advantage of the above method includes: making just a small amendment to existing technical specifications, which helps reduce the workload for standardization.

In one embodiment, an advantage of the above method includes: increasing the flexibility of scheduling of the base station.

In one embodiment, an advantage of the above method includes: ensuring good forward and backward compatibility.

According to one aspect of the present application, the above method is characterized in that,
the first HARQ Process ID is related to a result yielded by a sum of the first value and the second value modulo M1.

According to one aspect of the present application, the above method is characterized in that,
the first value is equal to a product of a value related to a number of time units corresponding to the first periodic value times M2.

According to one aspect of the present application, the above method is characterized in that,
the second value is related to a difference between the index of the first time unit and the target value.

According to one aspect of the present application, the above method is characterized in that,
the second value is equal to a result yielded by a value related to the index of the first time unit divided by the target value.

According to one aspect of the present application, the above method is characterized in that,
a reference time unit is one of the M2 candidate time units, and the target value is used to determine an index of the reference time unit.

According to one aspect of the present application, the above method is characterized in comprising:
receiving a second signaling;
herein, the second signaling is used to determine the target value.

The present application provides a method in a second node for wireless communications, comprising:
transmitting a first signaling, the first signaling used for determining a first periodic value and M1 candidate Hybrid Automatic Repeat reQuest (HARQ) Process IDs, M1 being greater than 1, the first periodic value being a length of period of a configured assignment, and any of the M1 candidate HARQ Process IDs being a non-negative integer; and
transmitting a first bit block in a first time unit, or, receiving a first bit block in a first time unit, the first time unit being one of M2 candidate time units, M2 being a positive integer greater than 1;
herein, the first bit block is associated with a first HARQ Process ID, the first HARQ Process ID being one of the M1 candidate HARQ Process IDs; a first value and a second value are used together to determine the first HARQ Process ID from the M1 candidate HARQ Process IDs; a time interval length between any two candidate time units among the M2 candidate time units is no larger than the first periodic value; the first periodic value and M2 are used together to determine the first value; an index of the first time unit and a target value are used together to determine the second value, and the target value is used to determine time-domain positions of the M2 candidate time units.

According to one aspect of the present application, the above method is characterized in that,
the first HARQ Process ID is related to a result yielded by a sum of the first value and the second value modulo M1.

According to one aspect of the present application, the above method is characterized in that,
the first value is equal to a product of a value related to a number of time units corresponding to the first periodic value times M2.

According to one aspect of the present application, the above method is characterized in that,
the second value is related to a difference between the index of the first time unit and the target value.

According to one aspect of the present application, the above method is characterized in that,
the second value is equal to a result yielded by a value related to the index of the first time unit divided by the target value.

According to one aspect of the present application, the above method is characterized in that,
a reference time unit is one of the M2 candidate time units, and the target value is used to determine an index of the reference time unit.

According to one aspect of the present application, the above method is characterized in comprising:
transmitting a second signaling;
herein, the second signaling is used to determine the target value.

The present application provides a first node for wireless communications, comprising:
a first receiver, which receives a first signaling, the first signaling used for determining a first periodic value and M1 candidate Hybrid Automatic Repeat reQuest (HARQ) Process IDs, M1 being greater than 1, the first periodic value being a length of period of a configured assignment, and any of the M1 candidate HARQ Process IDs being a non-negative integer; and
a first transceiver, which receives a first bit block in a first time unit, or, which transmits a first bit block in a first time unit, the first time unit being one of M2 candidate time units, M2 being a positive integer greater than 1;
herein, the first bit block is associated with a first HARQ Process ID, the first HARQ Process ID being one of the M1 candidate HARQ Process IDs; a first value and a second value are used together to determine the first HARQ Process ID from the M1 candidate HARQ Process IDs; a time interval length between any two candidate time units among the M2 candidate time units is no larger than the first periodic value; the first periodic value and M2 are used together to determine the first value; an index of the first time unit and a target value are used together to determine the second value, and the target value is used to determine time-domain positions of the M2 candidate time units.

The present application provides a second node for wireless communications, comprising:
a second transmitter, which transmits a first signaling, the first signaling used for determining a first periodic value and M1 candidate Hybrid Automatic Repeat reQuest (HARQ) Process IDs, M1 being greater than 1, the first periodic value being a length of period of a configured assignment, and any of the M1 candidate HARQ Process IDs being a non-negative integer; and
a second transceiver, which transmits a first bit block in a first time unit, or, which receives a first bit block in a first time unit, the first time unit being one of M2 candidate time units, M2 being a positive integer greater than 1;
herein, the first bit block is associated with a first HARQ Process ID, the first HARQ Process ID being one of the M1 candidate HARQ Process IDs; a first value and a second value are used together to determine the first HARQ Process ID from the M1 candidate HARQ Process IDs; a time interval length between any two candidate time units among the M2 candidate time units is no larger than the first periodic value; the first periodic value and M2 are used together to determine the first value; an index of the first time unit and a target value are used together to determine the second value, and the target value is used to determine time-domain positions of the M2 candidate time units.

The present application provides a method in a first node for wireless communications, comprising:
a first receiver, which receives a first signaling, the first signaling used for determining a first periodic value and M1 candidate Hybrid Automatic Repeat reQuest (HARQ) Process IDs, M1 being greater than 1, the first periodic value being a length of period of a configured assignment, and any of the M1 candidate HARQ Process IDs being a non-negative integer; and
a first transceiver, which receives a first bit block in a first time unit, or, which transmits a first bit block in a first time unit, the first time unit being one of M2 candidate time units, M2 being a positive integer greater than 1;
herein, the first bit block is associated with a first HARQ Process ID, the first HARQ Process ID being one of the M1 candidate HARQ Process IDs; a first value and a second value are used together to determine the first HARQ Process ID from the M1 candidate HARQ Process IDs; a time interval length between any two candidate time units among the M2 candidate time units is no larger than the first periodic value; the first periodic value and M2 are used together to determine the first value; a target value is used to determine the second value, and the target value is related to a time-domain position of the first time unit among the M2 candidate time units.

In one embodiment, characteristics of the above method include: there are multiple configured assignments respectively corresponding to multiple different HARQ process IDs/numbers within a specific period; for any configured assignment of the multiple configured assignments, a first value and a second value are used together to determine a corresponding HARQ process ID, where the first value is unrelated to a time-domain position in the specific period, while the second value is related to a time-domain position in the specific period.

In one embodiment, characteristics of the above method include: there are multiple configured assignments respectively corresponding to multiple different HARQ process IDs/numbers within periods of each configured assignment.

In one embodiment, characteristics of the above method include: in a period length of an SPS (or CG) configuration there exists multiple PDSCHs (or PUSCHs) assigned by the SPS (or CG) configuration being respectively associated with multiple different HARQ process IDs/numbers determined by different time-domain positions (or, logical orders of different configured assignments).

In one embodiment, an advantage of the above method includes: helping transmit more Transport Blocks (TBs) in a length of period of a configured assignment, thus enhancing the data transmission rate.

In one embodiment, an advantage of the above method includes: making it possible to configure more candidate transmission occasions, which helps reduce delay.

In one embodiment, an advantage of the above method includes: maximizing the time interval between two configured assignments of a same HARQ process ID, which makes full use of the HARQ process.

In one embodiment, an advantage of the above method includes: making just a small amendment to existing technical specifications, which helps reduce the workload for standardization.

In one embodiment, an advantage of the above method includes: increasing the flexibility of scheduling of the base station.

In one embodiment, an advantage of the above method includes: ensuring good forward and backward compatibility.

According to one aspect of the present application, the above method is characterized in that,
the first HARQ Process ID is related to a result yielded by a sum of the first value and the second value modulo M1.

According to one aspect of the present application, the above method is characterized in that,
the first value is equal to a product of a value related to a number of time units corresponding to the first periodic value times M2.

The present application provides a method in a second node for wireless communications, comprising:
transmitting a first signaling, the first signaling used for determining a first periodic value and M1 candidate Hybrid Automatic Repeat reQuest (HARQ) Process IDs, M1 being greater than 1, the first periodic value being a length of period of a configured assignment, and any of the M1 candidate HARQ Process IDs being a non-negative integer; and
transmitting a first bit block in a first time unit, or, receiving a first bit block in a first time unit, the first time unit being one of M2 candidate time units, M2 being a positive integer greater than 1;
herein, the first bit block is associated with a first HARQ Process ID, the first HARQ Process ID being one of the M1 candidate HARQ Process IDs; a first value and a second value are used together to determine the first HARQ Process ID from the M1 candidate HARQ Process IDs; a time interval length between any two candidate time units among the M2 candidate time units is no larger than the first periodic value; the first periodic value and M2 are used together to determine the first value; a target value is used to determine the second value, and the target value is related to a time-domain position of the first time unit among the M2 candidate time units.

According to one aspect of the present application, the above method is characterized in that,
the first HARQ Process ID is related to a result yielded by a sum of the first value and the second value modulo M1.

According to one aspect of the present application, the above method is characterized in that,
the first value is equal to a product of a value related to a number of time units corresponding to the first periodic value times M2.

The present application provides a first node for wireless communications, comprising:
a first receiver, which receives a first signaling, the first signaling used for determining a first periodic value and M1 candidate Hybrid Automatic Repeat reQuest (HARQ) Process IDs, M1 being greater than 1, the first periodic value being a length of period of a configured assignment, and any of the M1 candidate HARQ Process IDs being a non-negative integer; and
a first transceiver, which receives a first bit block in a first time unit, or, which transmits a first bit block in a first time unit, the first time unit being one of M2 candidate time units, M2 being a positive integer greater than 1;
herein, the first bit block is associated with a first HARQ Process ID, the first HARQ Process ID being one of the M1 candidate HARQ Process IDs; a first value and a second value are used together to determine the first HARQ Process ID from the M1 candidate HARQ Process IDs; a time interval length between any two candidate time units among the M2 candidate time units is no larger than the first periodic value; the first periodic value and M2 are used together to determine the first value; a target value is used to determine the second value, and the target value is related to a time-domain position of the first time unit among the M2 candidate time units.

According to one aspect of the present application, the first node is characterized in that,
the first HARQ Process ID is related to a result yielded by a sum of the first value and the second value modulo M1.

According to one aspect of the present application, the first node is characterized in that,
the first value is equal to a product of a value related to a number of time units corresponding to the first periodic value times M2.

The present application provides a second node for wireless communications, comprising:
a second transmitter, which transmits a first signaling, the first signaling used for determining a first periodic value and M1 candidate Hybrid Automatic Repeat reQuest (HARQ) Process IDs, M1 being greater than 1, the first periodic value being a length of period of a configured assignment, and any of the M1 candidate HARQ Process IDs being a non-negative integer; and
a second transceiver, which transmits a first bit block in a first time unit, or, which receives a first bit block in a first time unit, the first time unit being one of M2 candidate time units, M2 being a positive integer greater than 1;
herein, the first bit block is associated with a first HARQ Process ID, the first HARQ Process ID being one of the M1 candidate HARQ Process IDs; a first value and a second value are used together to determine the first HARQ Process ID from the M1 candidate HARQ Process IDs; a time interval length between any two candidate time units among the M2 candidate time units is no larger than the first periodic value; the first periodic value and M2 are used together to determine the first value; a target value is used to determine the second value, and the target value is related to a time-domain position of the first time unit among the M2 candidate time units.

In one embodiment, the method in the present application has the following advantages:
- helping enhance the data transmission rate;
- making it possible to configure more candidate transmission occasions, which helps reduce delay;
- ensuring efficient utilization of HARQ process;
- increasing the flexibility of scheduling of the base station;
- making only small amendments to the existing technical specifications; requiring only a small amount of work for standardization;
- being easily compatible.

### BRIEF DESCRIPTION OF THE DRAWINGS

Other features, objects and advantages of the present application will become more apparent from the detailed description of non-restrictive embodiments taken in conjunction with the following drawings:
FIG. 1 illustrates a flowchart of processing of a first node according to one embodiment of the present application.
FIG. 2 illustrates a schematic diagram of a network architecture according to one embodiment of the present application.
FIG. 3 illustrates a schematic diagram of a radio protocol architecture of a user plane and a control plane according to one embodiment of the present application.
FIG. 4 illustrates a schematic diagram of a first communication device and a second communication device according to one embodiment of the present application.
FIG. 5 illustrates a flowchart of signal transmission according to one embodiment of the present application.
FIG. 6 illustrates a schematic diagram of relations among a first value, a first periodic value and M2 according to one embodiment of the present application.
FIG. 7 illustrates a schematic diagram of relations among a first value, a first periodic value, an index of a first time unit and M2 according to one embodiment of the present application.
FIG. 8 illustrates a schematic diagram of relations among a first value, a second value and a first HARQ Process ID according to one embodiment of the present application.
FIG. 9 illustrates a schematic diagram of a relation between a second value and a difference between an index of a first time unit and a target value according to one embodiment of the present application.
FIG. 10 illustrates a schematic diagram of relations among an index of a first time unit, a target value and a second value according to one embodiment of the present application.
FIG. 11 illustrates a schematic diagram of relations among an index of a first time unit, a target value and a second value according to one embodiment of the present application.
FIG. 12 illustrates a schematic diagram of relations among an index of a first time unit, a target value and a second value according to one embodiment of the present application.
FIG. 13 illustrates a schematic diagram of relations among an index of a first time unit, a target value and a second value according to one embodiment of the present application.
FIG. 14 illustrates a schematic diagram of relations among a target value, a reference time unit and M2 candidate time units according to one embodiment of the present application.
FIG. 15 illustrates a schematic diagram of a relation between a second signaling and a target value according to one embodiment of the present application.
FIG. 16 illustrates a flowchart of processing of a first node according to one embodiment of the present application.
FIG. 17 illustrates a structure block diagram of a processing device in a first node according to one embodiment of the present application.
FIG. 18 illustrates a structure block diagram of a processing device in a second node according to one embodiment of the present application.

### DESCRIPTION OF THE EMBODIMENTS

The technical scheme of the present application is described below in further details in conjunction with the drawings. It should be noted that the embodiments of the present application and the characteristics of the embodiments may be arbitrarily combined if no conflict is caused.

### Embodiment 1

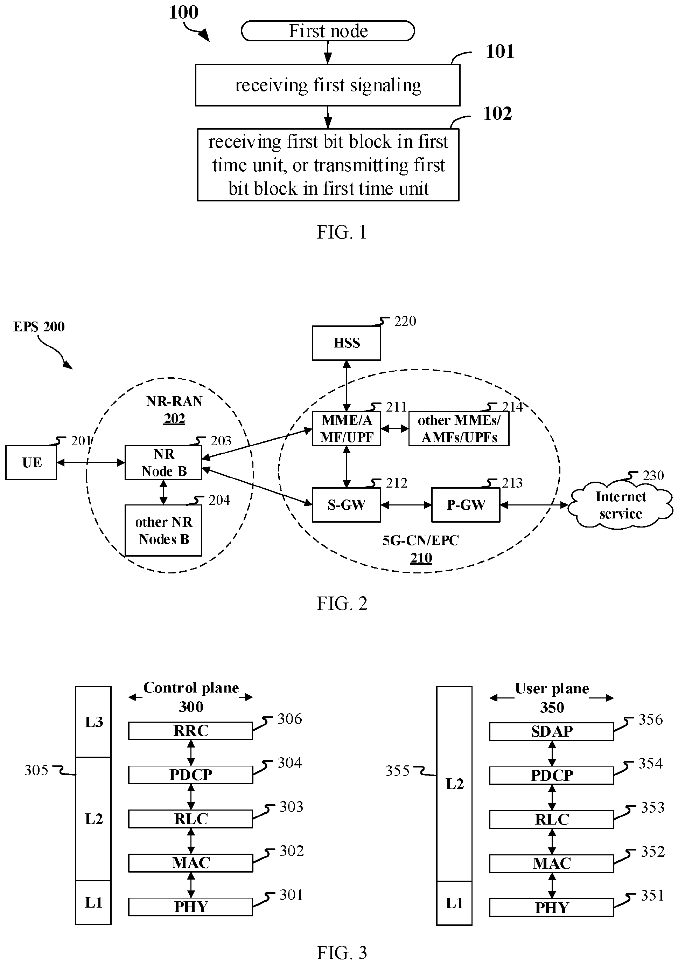

Embodiment 1 illustrates a flowchart of processing of a first node according to one embodiment of the present application, as shown in FIG. 1.

In Embodiment 1, the first node in the present application receives a first signaling in step 101; and receives a first bit block in a first time unit, or transmits a first bit block in a first time unit in step 102.

In Embodiment 1, the first signaling is used for determining a first periodic value and M1 candidate Hybrid Automatic Repeat reQuest (HARQ) Process IDs, M1 being greater than 1, the first periodic value being a length of period of a configured assignment, and any of the M1 candidate HARQ Process IDs being a non-negative integer; and the first time unit is one of M2 candidate time units, M2 being a positive integer greater than 1; the first bit block is associated with a first HARQ Process ID, the first HARQ Process ID being one of the M1 candidate HARQ Process IDs; a first value and a second value are used together to determine the first HARQ Process ID from the M1 candidate HARQ Process IDs; a time interval length between any two candidate time units among the M2 candidate time units is no larger than the first periodic value; the first periodic value and M2 are used together to determine the first value; an index of the first time unit and a target value are used together to determine the second value, and the target value is used to determine time-domain positions of the M2 candidate time units.

In one embodiment, the first signaling is a piece of Downlink control information (DCI).

In one embodiment, the first signaling comprises one or more fields in a DCI.

In one embodiment, the first signaling is a higher layer signaling.

In one embodiment, the first signaling is an RRC signaling.

In one embodiment, the first signaling comprises one or more fields in an RRC signaling.

In one embodiment, the first signaling comprises one Information Element (IE).

In one embodiment, the first signaling is a MAC CE signaling.

In one embodiment, the first signaling comprises one or more fields in a MAC CE signaling.

In one embodiment, the first signaling is a DownLink Grant Signaling.

In one embodiment, the first signaling is an UpLink Grant Signaling.

In one embodiment, the first signaling comprises an IE SPS-Config.

In one embodiment, the first signaling comprises an IE ConfiguredGrantConfig.

In one embodiment, the first bit block comprises multiple bits.

In one embodiment, the first bit block is a Transport Block (TB).

In one embodiment, the first bit block comprises one or two TBs.

In one embodiment, the first bit block comprises at least one Code Block Group (CBG).

In one embodiment, the first bit block has been through at least Cyclic Redundancy Check (CRC) attachment, Code Block Segmentation, Code Block CRC attachment, Channel Coding, Rate Matching and Code Block Concatenation, Scrambling, and Modulation and Resource Block Mapping before being transmitted.

In one embodiment, the first bit block has been through at least CRC attachment, Channel Coding and Rate Matching, Scrambling, and Modulation and Resource Block Mapping before being transmitted.

In one embodiment, the first bit block has been through at least CRC attachment, Code Block Segmentation, Code Block CRC attachment, Channel Coding, Rate Matching and Code Block Concatenation, Scrambling, Modulation, Layer Mapping, Antenna Port Mapping and Resource Block Mapping before being transmitted.

In one embodiment, the first bit block has been through at least CRC attachment, Channel Coding and Rate Matching, Scrambling, Modulation, Layer Mapping, Antenna Port Mapping and Resource Block Mapping before being transmitted.

In one embodiment, all or partial output by the first bit block after being through at least part of CRC attachment, Code Block Segmentation, Code Block CRC attachment, Channel Coding, Rate Matching, Code Block Concatenation, Scrambling, Modulation, Spreading, Layer Mapping, Precoding, Mapping to Physical Resources, Multicarrier Symbol Generation, and Modulation and Upconversion is transmitted in the first time unit.

In one embodiment, the statement in the present application of receiving a first bit block means: receiving a signal bearing the first bit block.

In one embodiment, the statement in the present application of receiving a first bit block means: receiving a first signal, the first signal comprising all or partial output by the first bit block through at least part of CRC attachment, Code Block Segmentation, Code Block CRC attachment, Channel Coding, Rate Matching, Code Block Concatenation, Scrambling, Modulation, Spreading, Layer Mapping, Precoding, Mapping to Physical Resources, Multicarrier Symbol Generation, and Modulation and Upconversion.

In one embodiment, the statement in the present application of transmitting a first bit block means: transmitting a signal bearing the first bit block.

In one embodiment, the statement in the present application of transmitting a first bit block means: transmitting a first signal, the first signal comprising all or partial output by the first bit block through at least part of CRC attachment, Code Block Segmentation, Code Block CRC attachment, Channel Coding, Rate Matching, Code Block Concatenation, Scrambling, Modulation, Spreading, Layer Mapping, Precoding, Mapping to Physical Resources, Multicarrier Symbol Generation, and Modulation and Upconversion.

In one embodiment, the first signal comprises a radio signal.

In one embodiment, the first signal comprises a radio frequency signal.

In one embodiment, the first signal comprises a baseband signal.

In one embodiment, that the first periodic value and M2 are used together to determine the first value means that: a number of time units corresponding to the first periodic value and M2 are used together to determine the first value.

In one embodiment, the first value is equal to the first periodic value multiplied by M2.

In one embodiment, the first value is equal to a positive integral multiple of a sum of the first periodic value and M2.

In one embodiment, the statement in the present application that a first value and a second value are used together to determine the first HARQ Process ID out of the M1 candidate HARQ Process IDs means that: which one of the M1 candidate HARQ Process IDs is the first HARQ Process ID is related to both the first value and the second value.

In one embodiment, the statement in the present application that the first periodic value and M2 are used together to determine the first value means that: the first value is related to both a number of time units corresponding to the first periodic value and M2.

In one embodiment, the statement in the present application that an index of the first time unit and a target value are used together to determine the second value means that: the second value is related to both an index of the first time unit and a target value.

In one embodiment, the statement in the present application that the target value is used to determine time-domain positions of the M2 candidate time units means that: time-domain positions of the M2 candidate time units are related to the target value.

In one embodiment, the first signaling is used for indicating the first periodic value.

In one embodiment, the first signaling is used for explicitly indicating the first periodic value.

In one embodiment, the first signaling is used for implicitly indicating the first periodic value.

In one embodiment, a field in the first signaling is used for indicating the first periodic value.

In one embodiment, a field periodicity in the first signaling is used for indicating the first periodic value.

In one embodiment, the first periodic value is equal to a positive integer number of symbol(s).

In one embodiment, the first periodic value is equal to a positive integer number of slot(s).

In one embodiment, the first periodic value is equal to a positive integer number of millisecond(s) (ms).

In one embodiment, the configured assignment is a configured downlink assignment.

In one embodiment, the configured assignment is a configured uplink grant.

In one embodiment, the configured assignment is used for semi-persistent scheduling.

In one embodiment, the time unit is a millisecond.

In one embodiment, the time unit is a slot.

In one embodiment, the time unit is a sub-slot.

In one embodiment, a said time unit includes one or more symbols.

In one embodiment, the time unit is a symbol.

In one embodiment, the time unit is an Orthogonal Frequency Division Multiplexing (OFDM) Symbol.

In one embodiment, the time unit is a Single Carrier- Frequency Division Multiple Access (SC-FDMA) symbol.

In one embodiment, the time unit is a Discrete Fourier Transform Spread OFDM (DFT-S-OFDM) symbol.

In one embodiment, the time unit is a Filter Bank Multi Carrier (FBMC) symbol.

In one embodiment, the time unit comprises a Cyclic Prefix (CP).

In one embodiment, the M2 candidate time units are sequentially arranged in time domain and are mutually non-overlapping in time domain.

In one embodiment, a time interval length between any two candidate time units among the M2 candidate time units is smaller than the first periodic value.

In one embodiment, the phrase that the first bit block is associated with the first HARQ Process ID includes a meaning that: the first bit block is assigned to a HARQ process corresponding to the first HARQ Process ID.

In one embodiment, the phrase that the first bit block is associated with the first HARQ Process ID includes a meaning that: HARQ information associated with the first bit block indicates the first HARQ Process ID.

In one embodiment, the first signaling is used for indicating the M1 candidate HARQ Process IDs.

In one embodiment, the first signaling is used for explicitly indicating the M1 candidate HARQ Process IDs.

In one embodiment, the first signaling is used for implicitly indicating the M1 candidate HARQ Process IDs.

In one embodiment, the first signaling is used for indicating an offset value for inferring a HARQ Process ID and M1, and the offset value for inferring the HARQ Process ID is used together with M1 to determine the M1 candidate HARQ Process IDs.

In one embodiment, M1 is equal to 1 or greater than 1.

In one embodiment, M1 is greater than 1.

In one embodiment, the first signaling is used to determine M1.

In one embodiment, the first signaling is used to indicate M1.

In one embodiment, the first signaling is used to explicitly indicate M1.

In one embodiment, the first signaling is used to implicitly indicate M1.

In one embodiment, the first signaling is used for indicating a number of configured HARQ Process IDs, where M1 is equal to the number of the configured HARQ Process IDs.

In one embodiment, M1 is indicated by a field nrofHARQ-Processes in the first signaling.

In one embodiment, the M1 candidate HARQ Process IDs includes/include 0, 1 ..., and M1-1.

In one embodiment, the M1 candidate HARQ Process IDs include 1, 2..., and M1.

In one embodiment, the first signaling is used for indicating M1 and a first offset value, the M1 candidate HARQ Process IDs including: the first offset value, the first offset value+1..., and the first offset value+M1-1.

In one embodiment, the M1 candidate HARQ Process IDs includes/include: a first offset value, a first offset value+1..., and a first offset value+M1-1; the first signaling is used to determine the first offset value, the first offset value being a non-negative integer.

In one embodiment, the first signaling is used for indicating the first offset value.

In one embodiment, the first signaling is used for explicitly indicating the first offset value.

In one embodiment, the first signaling is used for implicitly indicating the first offset value.

In one embodiment, the first offset value is an offset value for inferring a HARQ process ID.

In one embodiment, the first offset value is indicated by a harq-ProcID-Offset field in the first signaling.

In one embodiment, the first offset value is indicated by a harq-ProcID-Offset2 field in the first signaling.

In one embodiment, a result of arithmetic operations of the first value and the second value is used to determine the first HARQ Process ID out of the M1 candidate HARQ Process IDs.

In one embodiment, a product of the first value and the second value is used to indicate the first HARQ Process ID out of the M1 candidate HARQ Process IDs.

In one embodiment, the first HARQ Process ID is equal to a result yielded by a weighted sum of the first value and the second value modulo M1, where the first signaling is used to determine M1.

In one embodiment, the first HARQ Process ID is equal to a result yielded by a weighted sum of the first value and the second value modulo M1 plus a first offset value, where the first signaling is used to determine M1 and the first offset value.

In one embodiment, the index of the first time unit, the number of time units corresponding to the first periodic value and M2 are used together to determine the first value.

In one embodiment, M2 is configurable.

In one embodiment, M2 is indicated by a DCI.

In one embodiment, M2 is a number of PDSCH(s) corresponding to a row indicated by a DCI from a time-domain resource assignment table.

In one embodiment, M2 is configured by a higher layer signaling.

In one embodiment, given the index of the first time unit and the number of time units corresponding to the first periodic value, the first value is linear with M2.

In one embodiment, the first value is linear with a product of the number of time units corresponding to the first periodic value times M2.

In one embodiment, the first value is equal to a sum of the number of time units corresponding to the first periodic value and M2.

In one embodiment, the number of time units corresponding to the first periodic value is equal to the first periodic value.

In one embodiment, the number of time units corresponding to the first periodic value is equal to a positive integral multiple of the first periodic value.

In one embodiment, the number of time units corresponding to the first periodic value is equal to the first periodic value multiplied by a number of consecutive time units per frame being divided by 10.

In one embodiment, the number of time units corresponding to the first periodic value is equal to a time length of the first periodic value being divided by a time length of a time unit.

In one embodiment, the number of time units corresponding to the first periodic value is equal to a number of time units comprised in a time window with a length of the first periodic value.

In one embodiment, the target value is configurable.

In one embodiment, the target value is a configurable parameter value.

In one embodiment, the target value is obtained by calculation based on at least one configurable parameter value.

In one embodiment, at least one of the first signaling or the second signaling in the present application is used to determine the target value.

In one embodiment, the first signaling is used to determine the target value.

In one embodiment, the target value is a parameter value configured by the first signaling.

In one embodiment, at least one parameter configured by the first signaling is used to determine the target value.

In one embodiment, the target value is indicated by a DCI.

In one embodiment, the target value is obtained by calculation based on indication of a DCI.

In one embodiment, the target value is indicated by the second signaling in the present application.

In one embodiment, a said index in the present application is equal to a non-negative integer.

In one embodiment, an index of a time unit is an index determined by a System Frame Number (SFN) of a frame to which the time unit belongs and a slot number corresponding to the time unit together.

In one embodiment, an index of a time unit is an index determined by an SFN of a frame to which the time unit belongs, a slot number of a slot to which the time unit belongs and a symbol number corresponding to the time unit together.

In one embodiment, the first time unit is a slot, and the index of the first time unit is an index determined by an SFN of a frame to which the first time unit belongs and a slot number corresponding to the first time unit together.

In one embodiment, the index of the first time unit is equal to: a number of consecutive slots per frame multiplied by a System Frame Number (SFN) of a frame to which the first time unit belongs plus a slot number corresponding to the first time unit in the frame to which the first time unit belongs.

In one embodiment, the index of the first time unit is equal to: a System Frame Number (SFN) of a frame to which the first time unit belongs multiplied by a number of consecutive slots per frame multiplied by a number of consecutive symbols per slot plus a slot number corresponding to the first time unit in the frame to which the first time unit belongs multiplied by the number of consecutive symbols per slot plus a symbol number corresponding to the first time unit in a slot to which the first time unit belongs.

In one embodiment, a ratio of M1 to M2 is used to determine the second value.

In one embodiment, the target parameter is used for indicating time-domain positions of the M2 candidate time units.

In one embodiment, the target parameter is used for explicitly indicating time-domain positions of the M2 candidate time units.

In one embodiment, the target parameter is used for implicitly indicating time-domain positions of the M2 candidate time units.

In one embodiment, the target parameter is used to determine an end time of the M2 candidate time units.

In one embodiment, the target parameter is used to determine a start time of the M2 candidate time units.

In one embodiment, the first HARQ Process ID is related to a result yielded by a sum of the first value and the second value modulo M1.

In one embodiment, a sum of the first value and the second value is used to determine the first HARQ Process ID out of the M1 candidate HARQ Process IDs.

In one embodiment, the first HARQ Process ID is equal to a result yielded by a sum of the first value and the second value modulo M1.

In one embodiment, the first HARQ Process ID is equal to a result yielded by a sum of the first value and the second value modulo M1 plus a first offset value, where the first signaling is used to determine the first offset value.

### Embodiment 2

Embodiment 2 illustrates a schematic diagram of a network architecture according to the present application, as shown in FIG. 2.

FIG. 2 is a diagram illustrating a network architecture 200 of 5G NR, Long-Term Evolution (LTE) and Long-Term Evolution Advanced (LTE-A) systems. The 5G NR or LTE network architecture 200 may be called an Evolved Packet System (EPS) 200 or other suitable terminology. The EPS 200 may comprise one or more UEs 201, an NG-RAN 202, an Evolved Packet Core/5G-Core Network (EPC/5G-CN) 210, a Home Subscriber Server (HSS) 220 and an Internet Service 230. The EPS 200 may be interconnected with other access networks. For simple description, the entities/interfaces are not shown. As shown in FIG. 2, the EPS 200 provides packet switching services. Those skilled in the art will find it easy to understand that various concepts presented throughout the present application can be extended to networks providing circuit switching services or other cellular networks. The NG-RAN 202 comprises an NR node B (gNB) 203 and other gNBs 204. The gNB 203 provides UE 201 oriented user plane and control plane terminations. The gNB 203 may be connected to other gNBs 204 via an Xn interface (for example, backhaul). The gNB 203 may be called a base station, a base transceiver station, a radio base station, a radio transceiver, a transceiver function, a Base Service Set (BSS), an Extended Service Set (ESS), a Transmitter Receiver Point (TRP) or some other applicable terms. The gNB 203 provides an access point of the EPC/5G-CN 210 for the UE 201. Examples of UE 201 include cellular phones, smart phones, Session Initiation Protocol (SIP) phones, laptop computers, Personal Digital Assistant (PDA), Satellite Radios, non-terrestrial base station communications, satellite mobile communications, Global Positioning Systems (GPSs), multimedia devices, video devices, digital audio players (for example, MP3 players), cameras, games consoles, unmanned aerial vehicles, air vehicles, narrow-band physical network equipment, machine-type communication equipment, land vehicles, automobiles, wearable equipment, or any other devices having similar functions. Those skilled in the art also can call the UE 201 a mobile station, a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user proxy, a mobile client, a client or some other appropriate terms. The gNB 203 is connected to the EPC/5G-CN 210 via an S1/NG interface. The EPC/5G-CN 210 comprises a Mobility Management Entity (MME)/ Authentication Management Field (AMF)/ User Plane Function (UPF) 211, other MMEs/AMFs/UPFs 214, a Service Gateway (S-GW) 212 and a Packet Date Network Gateway (P-GW) 213. The MME/AMF/UPF 211 is a control node for processing a signaling between the UE 201 and the EPC/5G-CN 210. Generally, the MME/AMF/UPF 211 provides bearer and connection management. All user Internet Protocol (IP) packets are transmitted through the S-GW 212. The S-GW 212 is connected to the P-GW 213. The P-GW 213 provides UE IP address allocation and other functions. The P-GW 213 is connected to the Internet Service 230. The Internet Service 230 comprises IP services corresponding to operators, specifically including Internet, Intranet, IP Multimedia Subsystem (IMS) and Packet Switching Streaming (PSS) services.

In one embodiment, the UE 201 corresponds to the first node in the present application.

In one embodiment, the UE 201 corresponds to the second node in the present application.

In one embodiment, the gNB 203 corresponds to the first node in the present application.

In one embodiment, the gNB203 corresponds to the second node in the present application.

In one embodiment, the UE 201 corresponds to the first node in the present application, and the gNB203 corresponds to the second node in the present application.

In one embodiment, the gNB 203 is a MacroCellular base station.

In one embodiment, the gNB203 is a Micro Cell base station.

In one embodiment, the gNB 203 is a PicoCell base station.

In one embodiment, the gNB203 is a Femtocell.

In one embodiment, the gNB203 is a base station supporting large time-delay difference.

In one embodiment, the gNB203 is a flight platform.

In one embodiment, the gNB203 is satellite equipment.

In one embodiment, the first node and the second node in the present application both correspond to the UE 201, for instance, V2X communications is performed between the first node and the second node.

### Embodiment 3

Embodiment 3 illustrates a schematic diagram of a radio protocol architecture of a user plane and a control plane according to the present application, as shown in FIG. 3. FIG. 3 is a schematic diagram illustrating an embodiment of a radio protocol architecture of a user plane 350 and a control plane 300. In FIG. 3, the radio protocol architecture for a control plane 300 between a first communication node (UE, gNB or, RSU in V2X) and a second communication node (gNB, UE, or RSU in V2X), or between two UEs, is represented by three layers, which are a layer 1, a layer 2 and a layer 3, respectively. The layer 1 (L1) is the lowest layer which performs signal processing functions of various PHY layers. The L1 is called PHY 301 in the present application. The layer 2 (L2) 305 is above the PHY 301, and is in charge of the link between the first communication node and the second communication node or between two UEs via the PHY 301. The L2 305 comprises a Medium Access Control (MAC) sublayer 302, a Radio Link Control (RLC) sublayer 303 and a Packet Data Convergence Protocol (PDCP) sublayer 304. All the three sublayers terminate at the second communication nodes of the network side. The PDCP sublayer 304 provides multiplexing among variable radio bearers and logical channels. The PDCP sublayer 304 provides security by encrypting a packet and provides support for handover of a first communication node between second communication nodes. The RLC sublayer 303 provides segmentation and reassembling of a higher-layer packet, retransmission of a lost packet, and reordering of a packet so as to compensate the disordered receiving caused by Hybrid Automatic Repeat reQuest (HARQ). The MAC sublayer 302 provides multiplexing between a logical channel and a transport channel. The MAC sublayer 302 is also responsible for allocating between first communication nodes various radio resources (i.e., resource block) in a cell. The MAC sublayer 302 is also in charge of HARQ operation. In the control plane 300, The RRC sublayer 306 in the L3 layer is responsible for acquiring radio resources (i.e., radio bearer) and configuring the lower layer using an RRC signaling between the second communication node and the first communication node. The radio protocol architecture in the user plane 350 comprises the L1 layer and the L2 layer. In the user plane 350, the radio protocol architecture used for the first communication node and the second communication node in a PHY layer 351, a PDCP sublayer 354 of the L2 layer 355, an RLC sublayer 353 of the L2 layer 355 and a MAC sublayer 352 of the L2 layer 355 is almost the same as the radio protocol architecture used for corresponding layers and sublayers in the control plane 300, but the PDCP sublayer 354 also provides header compression used for higher-layer packet to reduce radio transmission overhead. The L2 layer 355 in the user plane 350 also comprises a Service Data Adaptation Protocol (SDAP) sublayer 356, which is in charge of the mapping between QoS streams and a Data Radio Bearer (DRB), so as to support diversified traffics. Although not described in FIG. 3, the first communication node may comprise several higher layers above the L2 355, such as a network layer (i.e., IP layer) terminated at a P-GW 213 of the network side and an application layer terminated at the other side of the connection (i.e., a peer UE, a server, etc.).

In one embodiment, the radio protocol architecture in FIG. 3 is applicable to the first node in the present application.

In one embodiment, the radio protocol architecture in FIG. 3 is applicable to the second node in the present application.

In one embodiment, the first signaling in the present application is generated by the RRC sublayer 306.

In one embodiment, the first signaling in the present application is generated by the MAC sublayer 302.

In one embodiment, the first signaling in the present application is generated by the MAC sublayer 352.

In one embodiment, the first signaling in the present application is generated by the PHY 301.

In one embodiment, the first signaling in the present application is generated by the PHY 351.

In one embodiment, the second signaling in the present application is generated by the RRC sublayer 306.

In one embodiment, the second signaling in the present application is generated by the MAC sublayer 302.

In one embodiment, the second signaling in the present application is generated by the MAC sublayer 352.

In one embodiment, the second signaling in the present application is generated by the PHY 301.

In one embodiment, the second signaling in the present application is generated by the PHY 351.

In one embodiment, the first bit block in the present application is generated by the SDAP sublayer 356.

In one embodiment, the first bit block in the present application is generated by the RRC sublayer 306.

In one embodiment, the first bit block in the present application is generated by the MAC sublayer 302.

In one embodiment, the first bit block in the present application is generated by the MAC sublayer 352.

In one embodiment, the first bit block in the present application is generated by the PHY 301.

In one embodiment, the first bit block in the present application is generated by the PHY 351.

### Embodiment 4

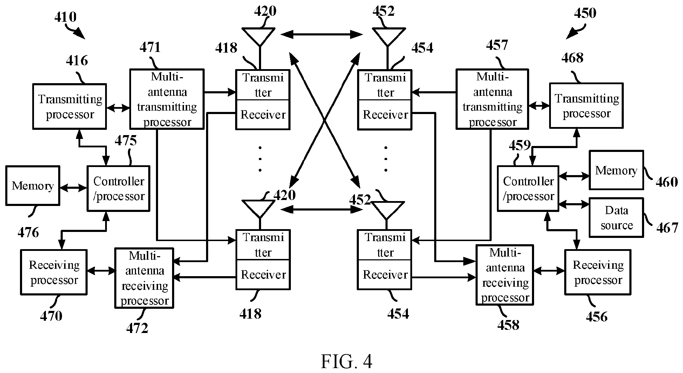

Embodiment 4 illustrates a schematic diagram of a first communication device and a second communication device according to the present application, as shown in FIG. 4. FIG. 4 is a block diagram of a first communication device 410 and a second communication device 450 in communication with each other in an access network.

The first communication device 410 comprises a controller/processor 475, a memory 476, a receiving processor 470, a transmitting processor 416, a multi-antenna receiving processor 472, a multi-antenna transmitting processor 471, a transmitter/receiver 418 and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitter/receiver 454 and an antenna 452.

In a transmission from the first communication device 410 to the second communication device 450, at the first communication device 410, a higher layer packet from a core network is provided to the controller/processor 475. The controller/processor 475 provides functions of the L2 layer. In the transmission from the first communication device 410 to the second communication device 450, the controller/processor 475 provides header compression, encryption, packet segmentation and reordering, and multiplexing between a logical channel and a transport channel, and radio resource allocation of the second communication device 450 based on various priorities. The controller/processor 475 is also in charge of a retransmission of a lost packet and a signaling to the second communication device 450. The transmitting processor 416 and the multi-antenna transmitting processor 471 perform various signal processing functions used for the L1 layer (i.e., PHY). The transmitting processor 416 performs coding and interleaving so as to ensure a Forward Error Correction (FEC) at the second communication device 450 side and the mapping to signal clusters corresponding to each modulation scheme (i.e., BPSK, QPSK, M-PSK, and M-QAM, etc.). The multi-antenna transmitting processor 471 performs digital spatial precoding, which includes precoding based on codebook and precoding based on non-codebook, and beamforming processing on encoded and modulated signals to generate one or more spatial streams. The transmitting processor 416 then maps each spatial stream into a subcarrier. The mapped symbols are multiplexed with a reference signal (i.e., pilot frequency) in time domain and/or frequency domain, and then they are assembled through Inverse Fast Fourier Transform (IFFT) to generate a physical channel carrying time-domain multicarrier symbol streams. After that the multi-antenna transmitting processor 471 performs transmission analog precoding/beamforming on the time-domain multicarrier symbol streams. Each transmitter 418 converts a baseband multicarrier symbol stream provided by the multi-antenna transmitting processor 471 into a radio frequency (RF) stream, which is later provided to different antennas 420.

In a transmission from the first communication device 410 to the second communication device 450, at the second communication device 450, each receiver 454 receives a signal via a corresponding antenna 452. Each receiver 454 recovers information modulated to the RF carrier, and converts the radio frequency stream into a baseband multicarrier symbol stream to be provided to the receiving processor 456. The receiving processor 456 and the multi-antenna receiving processor 458 perform signal processing functions of the L1 layer. The multi-antenna receiving processor 458 performs reception analog precoding/beamforming on a baseband multicarrier symbol stream provided by the receiver 454. The receiving processor 456 converts baseband multicarrier symbol streams which have gone through reception analog precoding/beamforming operations from time domain to frequency domain using FFT. In frequency domain, physical layer data signals and reference signals are de-multiplexed by the receiving processor 456, where the reference signals are used for channel estimation while data signals are processed in the multi-antenna receiving processor 458 by multi-antenna detection to recover any spatial stream targeting the second communication device 450. Symbols on each spatial stream are demodulated and recovered in the receiving processor 456 to generate a soft decision. Then the receiving processor 456 decodes and de-interleaves the soft decision to recover the higher-layer data and control signal transmitted by the first communication device 410 on the physical channel. Next, the higher-layer data and control signal are provided to the controller/processor 459. The controller/processor 459 provides functions of the L2 layer. The controller/processor 459 can be associated with a memory 460 that stores program code and data. The memory 460 can be called a computer readable medium. In the transmission from the first communication device 410 to the second communication device 450, the controller/processor 459 provides demultiplexing between a transport channel and a logical channel, packet reassembling, decrypting, header decompression and control signal processing so as to recover a higher-layer packet from the core network. The higher-layer packet is later provided to all protocol layers above the L2 layer. Or various control signals can be provided to the L3 for processing.

In a transmission from the second communication device 450 to the first communication device 410, at the second communication device 450, the data source 467 is configured to provide a higher-layer packet to the controller/processor 459. The data source 467 represents all protocol layers above the L2 layer. Similar to a transmitting function of the first communication device 410 described in the transmission from the first communication node 410 to the second communication node 450, the controller/processor 459 performs header compression, encryption, packet segmentation and reordering, and multiplexing between a logical channel and a transport channel based on radio resource allocation of the first communication device 410 so as to provide the L2 layer functions used for the user plane and the control plane. The controller/processor 459 is also responsible for a retransmission of a lost packet, and a signaling to the first communication device 410. The transmitting processor 468 performs modulation and mapping, as well as channel coding, and the multi-antenna transmitting processor 457 performs digital multi-antenna spatial precoding, including precoding based on codebook and precoding based on non-codebook, and beamforming. The transmitting processor 468 then modulates generated spatial streams into multicarrier/single-carrier symbol streams. The modulated symbol streams, after being subjected to analog precoding/beamforming in the multi-antenna transmitting processor 457, are provided from the transmitter 454 to each antenna 452. Each transmitter 454 firstly converts a baseband symbol stream provided by the multi-antenna transmitting processor 457 into a radio frequency symbol stream, and then provides the radio frequency symbol stream to the antenna 452.

In a transmission from the second communication device 450 to the first communication device 410, the function of the first communication device 410 is similar to the receiving function of the second communication device 450 described in the transmission from the first communication device 410 to the second communication device 450. Each receiver 418 receives a radio frequency signal via a corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly provide functions of the L1 layer. The controller/processor 475 provides functions of the L2 layer. The controller/processor 475 can be associated with the memory 476 that stores program code and data. The memory 476 can be called a computer readable medium. In the transmission between the second communication device 450 and the first communication device 410, the controller/processor 475 provides de-multiplexing between a transport channel and a logical channel, packet reassembling, decrypting, header decompression, control signal processing so as to recover a higher-layer packet from the second communication device (UE) 450. The higher-layer packet coming from the controller/processor 475 may be provided to the core network.

In one embodiment, the first node in the present application comprises the second communication device 450, and the second node in the present application comprises the first communication device 410.

In one subembodiment, the first node is a UE, and the second node is a UE.

In one subembodiment, the first node is a UE, and the second node is a relay node.

In one subembodiment, the first node is a relay node, and the second node is a UE.

In one subembodiment, the first node is a UE, and the second node is a base station.

In one subembodiment, the first node is a relay node, and the second node is a base station.

In one subembodiment, the second node is a UE, and the first node is a base station.

In one subembodiment, the second node is a relay node, and the first node is a base station.

In one subembodiment, the second communication device 450 comprises: at least one controller/processor; the at least one controller/processor is in charge of HARQ operation.

In one subembodiment, the first communication device 410 comprises: at least one controller/processor; the at least one controller/processor is in charge of HARQ operation.

In one subembodiment, the first communication device 410 comprises: at least one controller/processor; the at least one controller/processor is in charge of error detections using ACK and/or NACK protocols to support HARQ operation.

In one embodiment, the second communication device 450 comprises at least one processor and at least one memory, the at least one memory comprises computer program codes; the at least one memory and the computer program codes are configured to be used in collaboration with the at least one processor. The second communication device 450 at least: receives a first signaling, the first signaling used for determining a first periodic value and M1 candidate Hybrid Automatic Repeat reQuest (HARQ) Process IDs, M1 being greater than 1, the first periodic value being a length of period of a configured assignment, and any of the M1 candidate HARQ Process IDs being a non-negative integer; and receives a first bit block in a first time unit, or, transmitting a first bit block in a first time unit, the first time unit being one of M2 candidate time units, M2 being a positive integer greater than 1; herein, the first bit block is associated with a first HARQ Process ID, the first HARQ Process ID being one of the M1 candidate HARQ Process IDs; a first value and a second value are used together to determine the first HARQ Process ID from the M1 candidate HARQ Process IDs; a time interval length between any two candidate time units among the M2 candidate time units is no larger than the first periodic value; the first periodic value and M2 are used together to determine the first value; an index of the first time unit and a target value are used together to determine the second value, and the target value is used to determine time-domain positions of the M2 candidate time units.

In one subembodiment, the second communication device 450 corresponds to the first node in the present application.

In one embodiment, the second communication device 450 comprises a memory that stores a computer readable instruction program, the computer readable instruction program generates actions when executed by at least one processor, which include: receiving a first signaling, the first signaling used for determining a first periodic value and M1 candidate Hybrid Automatic Repeat reQuest (HARQ) Process IDs, M1 being greater than 1, the first periodic value being a length of period of a configured assignment, and any of the M1 candidate HARQ Process IDs being a non-negative integer; and receiving a first bit block in a first time unit, or, transmitting a first bit block in a first time unit, the first time unit being one of M2 candidate time units, M2 being a positive integer greater than 1; herein, the first bit block is associated with a first HARQ Process ID, the first HARQ Process ID being one of the M1 candidate HARQ Process IDs; a first value and a second value are used together to determine the first HARQ Process ID from the M1 candidate HARQ Process IDs; a time interval length between any two candidate time units among the M2 candidate time units is no larger than the first periodic value; the first periodic value and M2 are used together to determine the first value; an index of the first time unit and a target value are used together to determine the second value, and the target value is used to determine time-domain positions of the M2 candidate time units.

In one subembodiment, the second communication device 450 corresponds to the first node in the present application.

In one embodiment, the first communication device 410 comprises at least one processor and at least one memory, the at least one memory comprises computer program codes; the at least one memory and the computer program codes are configured to be used in collaboration with the at least one processor. The first communication device 410 at least: transmits a first signaling, the first signaling used for determining a first periodic value and M1 candidate Hybrid Automatic Repeat reQuest (HARQ) Process IDs, M1 being greater than 1, the first periodic value being a length of period of a configured assignment, and any of the M1 candidate HARQ Process IDs being a non-negative integer; and transmits a first bit block in a first time unit, or, receives a first bit block in a first time unit, the first time unit being one of M2 candidate time units, M2 being a positive integer greater than 1; herein, the first bit block is associated with a first HARQ Process ID, the first HARQ Process ID being one of the M1 candidate HARQ Process IDs; a first value and a second value are used together to determine the first HARQ Process ID from the M1 candidate HARQ Process IDs; a time interval length between any two candidate time units among the M2 candidate time units is no larger than the first periodic value; the first periodic value and M2 are used together to determine the first value; an index of the first time unit and a target value are used together to determine the second value, and the target value is used to determine time-domain positions of the M2 candidate time units.

In one subembodiment, the first communication device 410 corresponds to the second node in the present application.

In one embodiment, the first communication device 410 comprises a memory that stores a computer readable instruction program, the computer readable instruction program generates actions when executed by at least one processor, which include: transmitting a first signaling, the first signaling used for determining a first periodic value and M1 candidate Hybrid Automatic Repeat reQuest (HARQ) Process IDs, M1 being greater than 1, the first periodic value being a length of period of a configured assignment, and any of the M1 candidate HARQ Process IDs being a non-negative integer; and transmitting a first bit block in a first time unit, or, receiving a first bit block in a first time unit, the first time unit being one of M2 candidate time units, M2 being a positive integer greater than 1; herein, the first bit block is associated with a first HARQ Process ID, the first HARQ Process ID being one of the M1 candidate HARQ Process IDs; a first value and a second value are used together to determine the first HARQ Process ID from the M1 candidate HARQ Process IDs; a time interval length between any two candidate time units among the M2 candidate time units is no larger than the first periodic value; the first periodic value and M2 are used together to determine the first value; an index of the first time unit and a target value are used together to determine the second value, and the target value is used to determine time-domain positions of the M2 candidate time units.

In one subembodiment, the first communication device 410 corresponds to the second node in the present application.

In one embodiment, at least one of the antenna 452, the receiver 454, the multi-antenna receiving processor 458, the receiving processor 456, the controller/processor 459, the memory 460, or the data source 467 is used for receiving the first signaling in the present application.

In one embodiment, at least one of the antenna 420, the transmitter 418, the multi-antenna transmitting processor 471, the transmitting processor 416, the controller/processor 475 or the memory 476 is used for transmitting the first signaling in the present application.

In one embodiment, at least one of the antenna 452, the receiver 454, the multi-antenna receiving processor 458, the receiving processor 456, the controller/processor 459, the memory 460, or the data source 467 is used for receiving the second signaling in the present application.

In one embodiment, at least one of the antenna 420, the transmitter 418, the multi-antenna transmitting processor 471, the transmitting processor 416, the controller/processor 475 or the memory 476 is used for transmitting the second signaling in the present application.

In one embodiment, at least one of the antenna 452, the receiver 454, the multi-antenna receiving processor 458, the receiving processor 456, the controller/processor 459, the memory 460, or the data source 467 is used for receiving the first bit block in the present application in the first time unit in the present application.

In one embodiment, at least one of the antenna 420, the transmitter 418, the multi-antenna transmitting processor 471, the transmitting processor 416, the controller/processor 475 or the memory 476 is used for transmitting the first bit block in the present application in the first time unit in the present application.

In one embodiment, at least one of the antenna 452, the transmitter 454, the multi-antenna transmitting processor 458, the transmitting processor 468, the controller/processor 459, the memory 460, or the data source 467 is used for transmitting the first bit block in the present application in the first time unit in the present application.

In one embodiment, at least one of the antenna 420, the receiver 418, the multi-antenna receiving processor 472, the receiving processor 470, the controller/processor 475 or the memory 476 is used for receiving the first bit block in the present application in the first time unit in the present application.

In one embodiment, the second communication device 450 comprises at least one processor and at least one memory, the at least one memory comprises computer program codes; the at least one memory and the computer program codes are configured to be used in collaboration with the at least one processor. The second communication device 450 at least: receives a first signaling, the first signaling used for determining a first periodic value and M1 candidate Hybrid Automatic Repeat reQuest (HARQ) Process IDs, M1 being greater than 1, the first periodic value being a length of period of a configured assignment, and any of the M1 candidate HARQ Process IDs being a non-negative integer; and receives a first bit block in a first time unit, or, transmits a first bit block in a first time unit, the first time unit being one of M2 candidate time units, M2 being a positive integer greater than 1; herein, the first bit block is associated with a first HARQ Process ID, the first HARQ Process ID being one of the M1 candidate HARQ Process IDs; a first value and a second value are used together to determine the first HARQ Process ID from the M1 candidate HARQ Process IDs; a time interval length between any two candidate time units among the M2 candidate time units is no larger than the first periodic value; the first periodic value and M2 are used together to determine the first value; a target value is used to determine the second value, and the target value is related to a time-domain position of the first time unit among the M2 candidate time units.

In one subembodiment, the second communication device 450 corresponds to the first node in the present application.

In one embodiment, the second communication device 450 comprises a memory that stores a computer readable instruction program, the computer readable instruction program generates actions when executed by at least one processor, which include: receiving a first signaling, the first signaling used for determining a first periodic value and M1 candidate Hybrid Automatic Repeat reQuest (HARQ) Process IDs, M1 being greater than 1, the first periodic value being a length of period of a configured assignment, and any of the M1 candidate HARQ Process IDs being a non-negative integer; and receiving a first bit block in a first time unit, or, transmitting a first bit block in a first time unit, the first time unit being one of M2 candidate time units, M2 being a positive integer greater than 1; herein, the first bit block is associated with a first HARQ Process ID, the first HARQ Process ID being one of the M1 candidate HARQ Process IDs; a first value and a second value are used together to determine the first HARQ Process ID from the M1 candidate HARQ Process IDs; a time interval length between any two candidate time units among the M2 candidate time units is no larger than the first periodic value; the first periodic value and M2 are used together to determine the first value; a target value is used to determine the second value, and the target value is related to a time-domain position of the first time unit among the M2 candidate time units.

In one subembodiment, the second communication device 450 corresponds to the first node in the present application.

In one embodiment, the first communication device 410 comprises at least one processor and at least one memory, the at least one memory comprises computer program codes; the at least one memory and the computer program codes are configured to be used in collaboration with the at least one processor. The first communication device 410 at least: transmits a first signaling, the first signaling used for determining a first periodic value and M1 candidate Hybrid Automatic Repeat reQuest (HARQ) Process IDs, M1 being greater than 1, the first periodic value being a length of period of a configured assignment, and any of the M1 candidate HARQ Process IDs being a non-negative integer; and transmits a first bit block in a first time unit, or, receives a first bit block in a first time unit, the first time unit being one of M2 candidate time units, M2 being a positive integer greater than 1; herein, the first bit block is associated with a first HARQ Process ID, the first HARQ Process ID being one of the M1 candidate HARQ Process IDs; a first value and a second value are used together to determine the first HARQ Process ID from the M1 candidate HARQ Process IDs; a time interval length between any two candidate time units among the M2 candidate time units is no larger than the first periodic value; the first periodic value and M2 are used together to determine the first value; a target value is used to determine the second value, and the target value is related to a time-domain position of the first time unit among the M2 candidate time units.

In one subembodiment, the first communication device 410 corresponds to the second node in the present application.

In one embodiment, the first communication device 410 comprises a memory that stores a computer readable instruction program, the computer readable instruction program generates actions when executed by at least one processor, which include: transmitting a first signaling, the first signaling used for determining a first periodic value and M1 candidate Hybrid Automatic Repeat reQuest (HARQ) Process IDs, M1 being greater than 1, the first periodic value being a length of period of a configured assignment, and any of the M1 candidate HARQ Process IDs being a non-negative integer; and transmitting a first bit block in a first time unit, or, receiving a first bit block in a first time unit, the first time unit being one of M2 candidate time units, M2 being a positive integer greater than 1; herein, the first bit block is associated with a first HARQ Process ID, the first HARQ Process ID being one of the M1 candidate HARQ Process IDs; a first value and a second value are used together to determine the first HARQ Process ID from the M1 candidate HARQ Process IDs; a time interval length between any two candidate time units among the M2 candidate time units is no larger than the first periodic value; the first periodic value and M2 are used together to determine the first value; a target value is used to determine the second value, and the target value is related to a time-domain position of the first time unit among the M2 candidate time units.

In one subembodiment, the first communication device 410 corresponds to the second node in the present application.

### Embodiment 5

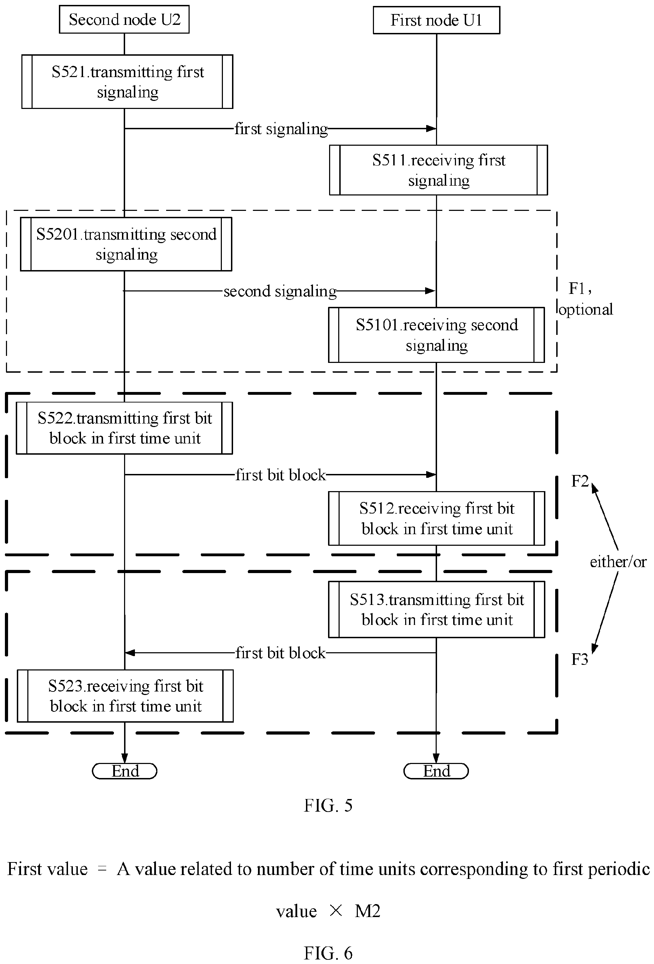

Embodiment 5 illustrates a flowchart of signal transmission according to one embodiment of the present application, as shown in FIG. 5. In FIG. 5, a first node U1 and a second node U2 are in communications via an air interface. In FIG. 5, steps marked by the dotted-line framed box F1 are optional; steps exist in only one of the box F2 framed with thick dotted lines or the box F3 framed with thick dotted lines.

The first node U1 receives a first signaling in step S511; and receives a second signaling in step S5101; and receives a first bit block in a first time unit in step S512, or transmits a first bit block in a first time unit in step S513.

The second node U2 transmits a first signaling in step S521; transmits a second signaling in step S5201; and transmits a first bit block in a first time unit in step S522, or receives a first bit block in a first time unit in step S523.

In Embodiment 5, the first signaling is used for determining a first periodic value and M1 candidate Hybrid Automatic Repeat reQuest (HARQ) Process IDs, M1 being greater than 1, the first periodic value being a length of period of a configured assignment, and any of the M1 candidate HARQ Process IDs being a non-negative integer; and the first time unit is one of M2 candidate time units, M2 being a positive integer greater than 1; the first bit block is associated with a first HARQ Process ID, the first HARQ Process ID being one of the M1 candidate HARQ Process IDs; a first value and a second value are used together to determine the first HARQ Process ID from the M1 candidate HARQ Process IDs; a time interval length between any two candidate time units among the M2 candidate time units is no larger than the first periodic value; the first periodic value and M2 are used together to determine the first value; an index of the first time unit and a target value are used together to determine the second value, and the target value is used to determine time-domain positions of the M2 candidate time units; the first HARQ Process ID is related to a result yielded by a sum of the first value and the second value modulo M1; the first value is equal to a product of a value related to a number of time units corresponding to the first periodic value times M2; a reference time unit is one of the M2 candidate time units, and the target value is used to determine an index of the reference time unit; the second signaling is used to determine the target value.

In one subembodiment of Embodiment 5, the second value is related to a difference between the index of the first time unit and the target value.

In one subembodiment of Embodiment 5, the second value is equal to a result yielded by a value related to the index of the first time unit divided by the target value.

In one embodiment, the first node U1 is the first node in the present application.

In one embodiment, the second node U2 is the second node in the present application.

In one embodiment, the first node U1 is a UE.

In one embodiment, the first node U1 is a base station.

In one embodiment, the second node U2 is a base station.

In one embodiment, the second node U2 is a UE.

In one embodiment, an air interface between the second node U2 and the first node U1 is a Uu interface.

In one embodiment, an air interface between the second node U2 and the first node U1 includes a cellular link.

In one embodiment, an air interface between the second node U2 and the first node U1 is a PC5 interface.

In one embodiment, an air interface between the second node U2 and the first node U1 includes a sidelink.

In one embodiment, an air interface between the second node U2 and the first node U1 includes a radio interface between a base station and a UE.

In one embodiment, an air interface between the second node U2 and the first node U1 includes a radio interface between a UE and another UE.

In one embodiment, steps marked by the dotted-line box F1 exist.

In one embodiment, steps marked by the dotted-line box F1 do not exist.

In one embodiment, steps marked by the thick dotted-line box F2 exist, while steps marked by the thick dotted-line box F3 do not exist.

In one embodiment, steps marked by the thick dotted-line box F2 do exist, while steps marked by the thick dotted-line box F3 exist.

### Embodiment 6

Embodiment 6 illustrates a schematic diagram of relations among a first value, a first periodic value and M2 according to one embodiment of the present application, as shown in FIG. 6.

In Embodiment 6, the first value in the present application is equal to a product of a value related to a number of time units corresponding to the first periodic value in the present application times M2 in the present application.

In one embodiment, the first value is equal to a product of a result obtained by rounding down a ratio of the index of the first time unit to the number of the time units corresponding to the first periodic value to a nearest integer times M2.

In one embodiment, the first value is equal to a largest non-negative integer no greater than the ratio of the index of the first time unit to the number of the time units corresponding to the first periodic value being multiplied by M2.

In one embodiment, the first value is no greater than a largest non-negative integer no greater than the ratio of the index of the first time unit to the number of the time units corresponding to the first periodic value being multiplied by M2.

In one embodiment, the first value is equal to a result yielded by a largest positive integer no greater than the ratio of the index of the first time unit to the number of the time units corresponding to the first periodic value modulo a smallest positive integer no less than a ratio of M1 to M2.

In one embodiment, the first value = floor(the index of the first time unit/the number of the time units corresponding to the first periodic value) modulo a smallest positive integer no less than a ratio of M1 to M2, where the floor() indicates rounding down to a nearest integer.

### Embodiment 7

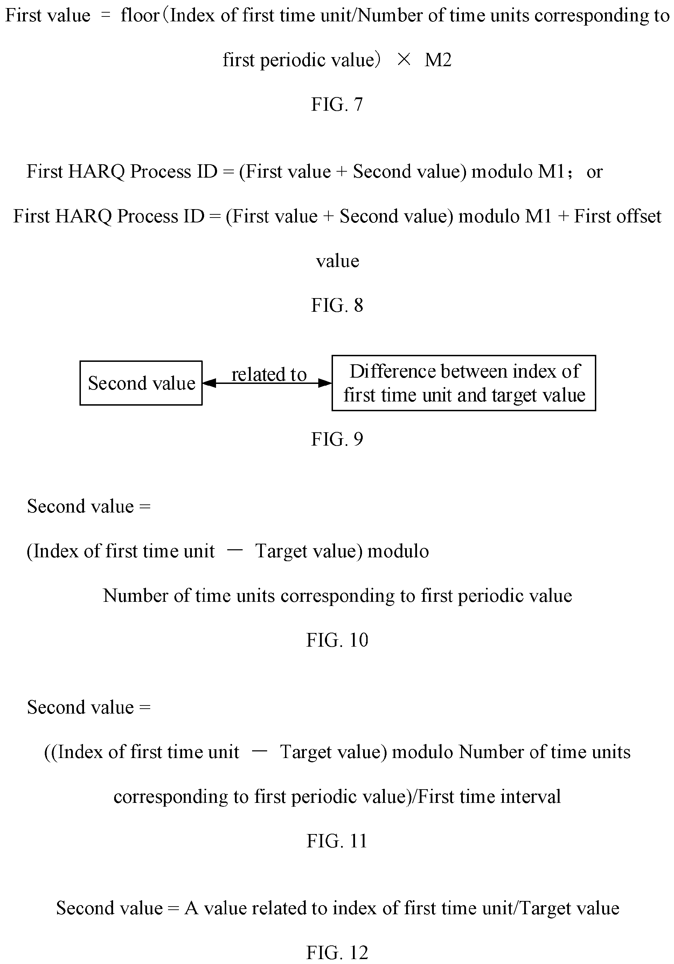

Embodiment 7 illustrates a schematic diagram of relations among a first value, a first periodic value, an index of a first time unit and M2 according to one embodiment of the present application, as shown in FIG. 7.

In Embodiment 7, the first value in the present application is equal to a product of a result obtained by rounding down a ratio of an index of the first time unit in the present application to a number of time units corresponding to the first periodic value in the present application to a nearest integer times M2 in the present application.

In one embodiment, floor(·) in the present application indicates the operation of rounding down to a nearest integer.

### Embodiment 8

Embodiment 8 illustrates a schematic diagram of relations among a first value, a second value and a first HARQ Process ID according to one embodiment of the present application, as shown in FIG. 8.

In Embodiment 8, the first HARQ Process ID in the present application is equal to a result yielded by a sum of the first value in the present application and the second value in the present application modulo M1 in the present application; or, the first HARQ Process ID in the present application is equal to a result yielded by a sum of the first value in the present application and the second value in the present application modulo M1 in the present application plus a first offset value, where the first signaling in the present application is used to determine the first offset value.

In one embodiment, modulo in the present application indicates modular operation.

In one embodiment, the first signaling is used for indicating the first offset value.

In one embodiment, the first signaling is used for explicitly indicating the first offset value.

In one embodiment, the first signaling is used for implicitly indicating the first offset value.

In one embodiment, the first offset value is a non-negative integer.

In one embodiment, the first offset value is an offset value for inferring a HARQ process ID.

In one embodiment, the first offset value is indicated by a harq-ProcID-Offset field in the first signaling.

In one embodiment, the first offset value is indicated by a harq-ProcID-Offset2 field in the first signaling.

### Embodiment 9

Embodiment 9 illustrates a schematic diagram of a relation between a second value and a difference between an index of a first time unit and a target value according to one embodiment of the present application, as shown in FIG. 9.

In Embodiment 9, the second value in the present application is related to a difference between an index of the first time unit in the present application and the target value in the present application.

In one embodiment, a difference of the index of the first time unit minus the target value is used to determine the second value.

In one embodiment, the second value is equal to a difference of the index of the first time unit minus the target value.

In one embodiment, the second value is equal to a result yielded by a difference of the index of the first time unit minus the target value modulo the number of time units corresponding to the first periodic value.

In one embodiment, the second value is equal to a result yielded by a difference of the index of the first time unit minus the target value modulo the number of time units corresponding to the first periodic value further divided by a first time interval, the first time interval being a positive integer greater than 1.

In one embodiment, the second value is equal to a result yielded by the index of the first time unit being subtracted by a sum of a fourth value and the target value modulo the number of time units corresponding to the first periodic value, where the fourth value is equal to a number of consecutive slots per frame multiplied by a starting System Frame Number (SFN), the starting SFN being an SFN of a first transmission of a PDSCH where a configured downlink assignment was initialized (or, re-initialized).

In one embodiment, the second value is equal to a result yielded by the index of the first time unit being subtracted by a sum of a fourth value and the target value modulo the number of time units corresponding to the first periodic value further being divided by a first time interval, where the fourth value is equal to a number of consecutive slots per frame multiplied by a starting System Frame Number (SFN), the starting SFN being an SFN of a first transmission of a PDSCH where a configured downlink assignment was initialized (or, re-initialized), and the first time interval is a positive integer greater than 1.

In one embodiment, the second value = (the index of the first time unit - (a fourth value + the target value)) modulo the number of time units corresponding to the first periodic value; the fourth value is equal to a number of consecutive slots per frame multiplied by a starting SFN, the starting SFN being an SFN of a first transmission of a PDSCH where a configured downlink assignment was initialized (or, re-initialized).

In one embodiment, the second value = ((the index of the first time unit - (a fourth value + the target value)) modulo the number of time units corresponding to the first periodic value)/a first time interval; the fourth value is equal to a number of consecutive slots per frame multiplied by a starting SFN, the starting SFN being an SFN of a first transmission of a PDSCH where a configured downlink assignment was initialized (or, re-initialized), and the first time interval is a positive integer greater than 1.

In one embodiment, the second value is equal to a result yielded by a difference of the index of the first time unit minus a sum of a fourth value and the target value modulo the number of time units corresponding to the first periodic value.

In one subembodiment, the fourth value is equal to a reference SFN multiplied by a number of consecutive slots per frame multiplied by a number of consecutive symbols per slot plus a time-domain offset value multiplied by the number of consecutive symbols per slot, where the first signaling is used for configuring the reference SFN and the time-domain offset value.

In one subembodiment, the fourth value is equal to a starting SFN multiplied by a number of consecutive slots per frame multiplied by a number of consecutive symbols per slot plus a starting slot number multiplied by the number of consecutive symbols per slot, where the starting SFN and the starting slot number are respectively an SFN and a slot number of a first transmission occasion of a PUSCH where a configured uplink grant was initialized (or, re-initialized).

In one embodiment, the second value is equal to a result yielded by a difference of the index of the first time unit minus a sum of a fourth value and the target value modulo the number of time units corresponding to the first periodic value further divided by a first time interval, the first time interval being a positive integer greater than 1.

In one subembodiment, the fourth value is equal to a reference SFN multiplied by a number of consecutive slots per frame multiplied by a number of consecutive symbols per slot plus a time-domain offset value multiplied by the number of consecutive symbols per slot, where the first signaling is used for configuring the reference SFN and the time-domain offset value.

In one subembodiment, the fourth value is equal to a starting SFN multiplied by a number of consecutive slots per frame multiplied by a number of consecutive symbols per slot plus a starting slot number multiplied by the number of consecutive symbols per slot, where the starting SFN and the starting slot number are respectively an SFN and a slot number of a first transmission occasion of a PUSCH where a configured uplink grant was initialized (or, re-initialized).

In one embodiment, the second value is equal to a result yielded by a value less than a difference of the index of the first time unit minus the target value modulo the number of time units corresponding to the first periodic value.

In one embodiment, the second value is equal to a result yielded by a value less than a difference of the index of the first time unit minus the target value modulo the number of time units corresponding to the first periodic value further divided by a first time interval, the first time interval being a positive integer greater than 1.

In one embodiment, the second value is equal to a result yielded by a difference of the index of the first time unit minus the target value modulo the number of time units corresponding to the first periodic value further multiplied by a smallest positive integer no less than a ratio of M1 to M2.

In one embodiment, the second value is equal to a result yielded by a difference of the index of the first time unit minus the target value modulo the number of time units corresponding to the first periodic value divided by a first time interval and then multiplied by a smallest positive integer no less than a ratio of M1 to M2, the first time interval being a positive integer greater than 1.

In one embodiment, the second value = ((the index of the first time unit - the target value) modulo the number of time units corresponding to the first periodic value) × a result yielded by rounding up a ratio of M1 to M2 to a nearest integer.

In one embodiment, the second value = ((the index of the first time unit - the target value) modulo the number of time units corresponding to the first periodic value)/a first time interval × a result yielded by rounding up a ratio of M1 to M2 to a nearest integer.

In one embodiment, the target value is an index of a time unit other than the first time unit.

In one embodiment, the target value is equal to an index of a time unit other than the first time unit.

In one embodiment, the target value is equal to an index of a time unit to which a first transmission of a PDSCH where a configured downlink assignment was initialized (or, re-initialized) belongs.

In one embodiment, the target value is equal to an index of a time unit to which a first transmission occasion of a PUSCH where a configured uplink grant was initialized (or, re-initialized) belongs.

In one embodiment, the target value is a slot number of a first transmission of a PDSCH where a configured downlink assignment was initialized (or, re-initialized).

In one embodiment, the target value is a symbol number of a first transmission occasion of a PUSCH where a configured uplink grant was initialized (or, re-initialized).

In one embodiment, the target value is configured by the first signaling in the present application.

In one embodiment, the target value is equal to a number of consecutive slots per frame multiplied by a starting System Frame Number (SFN) plus a starting slot number, where the starting SFN and the starting slot number are respectively an SFN and a slot number of a first transmission of a PDSCH where a configured downlink assignment was initialized (or, re-initialized).

In one embodiment, the target value is equal to a reference System Frame Number (SFN) multiplied by a number of consecutive slots per frame multiplied by a number of consecutive symbols per slot plus a time-domain offset value multiplied by the number of consecutive symbols per slot plus a reference symbol number, where the first signaling is used for configuring the reference SFN and the time-domain offset value, and another parameter configured by the first signaling is used for inferring the reference symbol number.

In one embodiment, the target value is equal to a starting System Frame Number (SFN) multiplied by a number of consecutive slots per frame multiplied by a number of consecutive symbols per slot plus a starting slot number multiplied by the number of consecutive symbols per slot plus a starting symbol number, where the starting SFN, the starting slot number and the starting symbol number are respectively an SFN, a slot number and a symbol number of a first transmission occasion of a PUSCH where a configured uplink grant was initialized (or, re-initialized).

In one embodiment, the slot number in the present application is an intra-frame slot number.

In one embodiment, the symbol number in the present application is an intra-slot symbol number.

In one embodiment, in the present application, an SFN of a first transmission of a PDSCH where a configured downlink assignment was initialized (or, re-initialized) refers to: an SFN of a frame to which a first transmission of a PDSCH where a configured downlink assignment was initialized (or, re-initialized) belongs in time domain.

In one embodiment, in the present application, a slot number of a first transmission of a PDSCH where a configured downlink assignment was initialized (or, re-initialized) refers to: a slot number of a slot to which a first transmission of a PDSCH where a configured downlink assignment was initialized (or, re-initialized) belongs in time domain.

In one embodiment, in the present application, an SFN of a first transmission occasion of a PUSCH where a configured uplink grant was initialized (or, re-initialized) refers to: an SFN of a frame to which a first transmission occasion of a PUSCH where a configured uplink grant was initialized (or, re-initialized) belongs in time domain.

In one embodiment, in the present application, a slot number of a first transmission occasion of a PUSCH where a configured uplink grant was initialized (or, re-initialized) refers to: a slot number of a slot to which a first transmission occasion of a PUSCH where a configured uplink grant was initialized (or, re-initialized) belongs in time domain.

In one embodiment, in the present application, a symbol number of a first transmission occasion of a PUSCH where a configured uplink grant was initialized (or, re-initialized) refers to: a symbol number of an earliest symbol occupied by a first transmission occasion of a PUSCH where a configured uplink grant was initialized (or, re-initialized) in time domain.

In one embodiment, in the present application, an SFN of a first transmission of a PDSCH where a configured downlink assignment was initialized (or, re-initialized) refers to: an SFN of a frame to which a first transmission of a PDSCH corresponding to initialization (or, re-initialization) of a configured downlink assignment belongs in time domain.

In one embodiment, in the present application, a slot number of a first transmission of a PDSCH where a configured downlink assignment was initialized (or, re-initialized) refers to: a slot number of a slot to which a first transmission of a PDSCH corresponding to initialization (or, re-initialization) of a configured downlink assignment belongs in time domain.

In one embodiment, in the present application, an SFN of a first transmission occasion of a PUSCH where a configured uplink grant was initialized (or, re-initialized) refers to: an SFN of a frame to which a first transmission occasion of a PUSCH corresponding to initialization (or, re-initialization) of a configured uplink grant belongs in time domain.

In one embodiment, in the present application, a slot number of a first transmission occasion of a PUSCH where a configured uplink grant was initialized (or, re-initialized) refers to: a slot number of a slot to which a first transmission occasion of a PUSCH corresponding to initialization (or, re-initialization) of a configured uplink grant belongs in time domain.

In one embodiment, in the present application, a symbol number of a first transmission occasion of a PUSCH where a configured uplink grant was initialized (or, re-initialized) refers to: a symbol number of an earliest symbol occupied by a first transmission occasion of a PUSCH corresponding to initialization (or, re-initialization) of a configured uplink grant in time domain.

In one embodiment, at least one of the first signaling or the second signaling in the present application is used to determine the first time interval.

In one embodiment, the first time interval is configurable.

In one embodiment, the first time interval is a configurable parameter value.

In one embodiment, the first time interval is configured by the first signaling in the present application.

In one embodiment, the first time interval is a value of a pdsch-AggregationFactor field.

In one embodiment, the first time interval is obtained by calculation based on at least one configurable parameter value.

In one embodiment, the first time interval is equal to a product of two configurable parameter values.

In one embodiment, the first time interval is indicated by a DCI.

In one embodiment, the first time interval is a value indicated by a DCI among multiple candidate configurations configured by a higher layer signaling.

In one embodiment, the first time interval is indicated by the second signaling in the present application.

### Embodiment 10

Embodiment 10 illustrates a schematic diagram of relations among an index of a first time unit, a target value and a second value according to one embodiment of the present application, as shown in FIG. 10.

In Embodiment 10, the second value in the present application is equal to a result yielded by a difference of the index of the first time unit in the present application minus the target value in the present application modulo the number of time units corresponding to the first periodic value in the present application.

### Embodiment 11

Embodiment 11 illustrates a schematic diagram of relations among an index of a first time unit, a target value and a second value according to one embodiment of the present application, as shown in FIG. 11.

In Embodiment 11, the second value in the present application is equal to a result yielded by a difference of the index of the first time unit in the present application minus the target value in the present application modulo the number of time units corresponding to the first periodic value in the present application further divided by a first time interval, the first time interval being a positive integer greater than 1.

In one embodiment, the first time interval is configurable.

In one embodiment, the first time interval is a configurable parameter value.

In one embodiment, the first time interval is configured by the first signaling in the present application.

In one embodiment, the first time interval is a value of a pdsch-AggregationFactor field.

In one embodiment, the first time interval is obtained by calculation based on at least one configurable parameter value.

In one embodiment, the first time interval is equal to a product of two configurable parameter values.

In one embodiment, the first time interval is indicated by a DCI.

In one embodiment, the first time interval is a value indicated by a DCI among multiple candidate configurations configured by a higher layer signaling.

In one embodiment, the first time interval is indicated by the second signaling in the present application.

### Embodiment 12

Embodiment 12 illustrates a schematic diagram of relations among an index of a first time unit, a target value and a second value according to one embodiment of the present application, as shown in FIG. 12.

In Embodiment 12, the second value in the present application is equal to a value related to the index of the first time unit in the present application divided by the target value in the present application.

In one embodiment, the second value is equal to a result yielded by a value related to the index of the first time unit divided by the target value being rounded down to a nearest integer.

In one embodiment, the second value is equal to a result yielded by a difference of the index of the first time unit minus a third value modulo the number of time units corresponding to the first periodic value being further divided by the target value, the third value being a non-negative integer.

In one embodiment, the second value is equal to a result yielded by a difference of the index of the first time unit minus a third value modulo the number of time units corresponding to the first periodic value being further divided by a positive integral multiple of the target value, the third value being a non-negative integer.

In one embodiment, the second value = ((the index of the first time unit - a third value) modulo the number of time units corresponding to the first periodic value)/a positive integral multiple of the target value, the third value being a non-negative integer.

In one embodiment, the third value is an index of a time unit other than the first time unit.

In one embodiment, the third value is equal to an index of a time unit to which a first transmission of a PDSCH where a configured downlink assignment was initialized (or, re-initialized) belongs.

In one embodiment, the third value is equal to an index of a time unit to which a first transmission occasion of a PUSCH where a configured uplink grant was initialized (or, re-initialized) belongs.

In one embodiment, the third value is equal to a number of consecutive slots per frame multiplied by a starting System Frame Number (SFN) plus a starting slot number, where the starting SFN and the starting slot number are respectively an SFN and a slot number of a first transmission of a PDSCH where a configured downlink assignment was initialized (or, re-initialized).

In one embodiment, the third value is equal to a reference System Frame Number (SFN) multiplied by a number of consecutive slots per frame multiplied by a number of consecutive symbols per slot plus a time-domain offset value multiplied by the number of consecutive symbols per slot plus a reference symbol number, where the first signaling is used for configuring the reference SFN and the time-domain offset value, and another parameter configured by the first signaling is used for inferring the reference symbol number.

In one embodiment, the third value is equal to a starting System Frame Number (SFN) multiplied by a number of consecutive slots per frame multiplied by a number of consecutive symbols per slot plus a starting slot number multiplied by the number of consecutive symbols per slot plus a starting symbol number, where the starting SFN, the starting slot number and the starting symbol number are respectively an SFN, a slot number and a symbol number of a first transmission occasion of a PUSCH where a configured uplink grant was initialized (or, re-initialized).

In one embodiment, the target value is configured by the first signaling in the present application.

In one embodiment, the target value is a value of a pdsch-AggregationFactor field.

In one embodiment, the target value is obtained by calculation based on at least one configurable parameter value.

In one embodiment, the target value is equal to a product of two configurable parameter values.

In one embodiment, the target value is indicated by a DCI.

In one embodiment, the target value is a value indicated by a DCI among multiple candidate configurations configured by a higher layer signaling.

In one embodiment, the target value is indicated by the second signaling in the present application.

### Embodiment 13

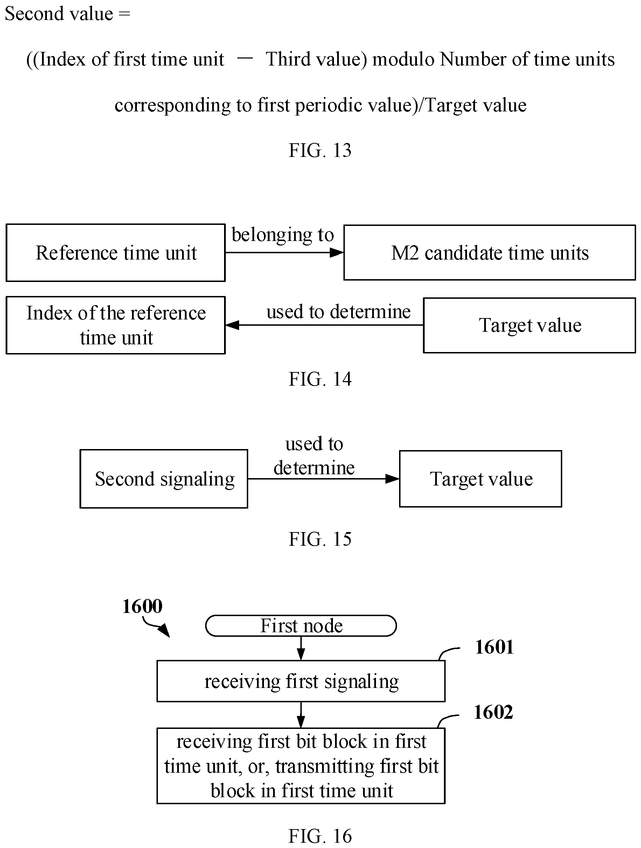

Embodiment 13 illustrates a schematic diagram of relations among an index of a first time unit, a target value and a second value according to one embodiment of the present application, as shown in FIG. 13.

In Embodiment 13, the second value in the present application is equal to a result yielded by a difference of the index of the first time unit in the present application minus a third value modulo the number of time units corresponding to the first periodic value in the present application further divided by the target value in the present application, where the third value is a non-negative integer.

In one embodiment, the third value is an index of a time unit other than the first time unit.

In one embodiment, the third value is equal to an index of a time unit other than the first time unit.

In one embodiment, the third value is equal to an index of a time unit to which a first transmission of a PDSCH where a configured downlink assignment was initialized (or, re-initialized) belongs.

In one embodiment, the third value is equal to an index of a time unit to which a first transmission occasion of a PUSCH where a configured uplink grant was initialized (or, re-initialized) belongs.

In one embodiment, the third value is equal to a number of consecutive slots per frame multiplied by a starting System Frame Number (SFN) plus a starting slot number, where the starting SFN and the starting slot number are respectively an SFN and a slot number of a first transmission of a PDSCH where a configured downlink assignment was initialized (or, re-initialized).

In one embodiment, the third value is equal to a reference System Frame Number (SFN) multiplied by a number of consecutive slots per frame multiplied by a number of consecutive symbols per slot plus a time-domain offset value multiplied by the number of consecutive symbols per slot plus a reference symbol number, where the first signaling is used for configuring the reference SFN and the time-domain offset value, and another parameter configured by the first signaling is used for inferring the reference symbol number.

In one embodiment, the third value is equal to a starting System Frame Number (SFN) multiplied by a number of consecutive slots per frame multiplied by a number of consecutive symbols per slot plus a starting slot number multiplied by the number of consecutive symbols per slot plus a starting symbol number, where the starting SFN, the starting slot number and the starting symbol number are respectively an SFN, a slot number and a symbol number of a first transmission occasion of a PUSCH where a configured uplink grant was initialized (or, re-initialized).

### Embodiment 14

Embodiment 14 illustrates a schematic diagram of relations among a target value, a reference time unit and M2 candidate time units according to one embodiment of the present application, as shown in FIG. 14.

In Embodiment 14, the reference time unit in the present application is one of the M2 candidate time units in the present application, and the target value in the present application is used to determine an index of the reference time unit.

In one embodiment, the second value is equal to a result yielded by a difference of the index of the first time unit minus the index of the reference time unit modulo the number of time units corresponding to the first periodic value.

In one embodiment, the second value is equal to a result yielded by a difference of the index of the first time unit minus the index of the reference time unit modulo the number of time units corresponding to the first periodic value further divided by a first time interval, the first time interval being a positive integer greater than 1.

In one embodiment, in the present application, a time-domain position of a time unit is determined by an index of the time unit.

In one embodiment, in the present application, an index of a time unit is an index indicating a time-domain position of the time unit.

In one embodiment, an index of a time unit is equal to a number of consecutive slots per frame multiplied by a System Frame Number (SFN) of a frame to which the time unit belongs plus a slot number corresponding to the time unit in a frame to which the time unit belongs.

In one embodiment, an index of a time unit is equal to a System Frame Number (SFN) of a frame to which the time unit belongs multiplied by a number of consecutive slots per frame multiplied by a number of consecutive symbols per slot plus a slot number corresponding to the time unit in the frame to which the time unit belongs multiplied by the number of consecutive symbols per slot plus a symbol number corresponding to the time unit in a slot to which the time unit belongs.

In one embodiment, the target value is used to indicate an index of the reference time unit.

In one embodiment, the target value is used to explicitly indicate an index of the reference time unit.

In one embodiment, the target value is used to implicitly indicate an index of the reference time unit.

In one embodiment, the target value is used for performing calculation to obtain an index of the reference time unit.

In one embodiment, an index of the reference time unit is equal to: a result yielded by a sum of the target value plus a product of a configured downlink assignment number corresponding to the reference time unit and the number of time units corresponding to the first periodic value modulo a product of 1024 times a number of consecutive slots per frame.

In one embodiment, an index of the reference time unit is equal to: [the target value + a configured downlink assignment number corresponding to the reference time unit × the number of time units corresponding to the first periodic value] modulo (1024 × a number of consecutive slots per frame).

In one embodiment, an index of the reference time unit is equal to: a result yielded by a sum of the target value plus a product of a configured uplink grant number corresponding to the reference time unit and the number of time units corresponding to the first periodic value modulo a product of 1024 times a number of consecutive slots per frame times a number of consecutive symbols per slot.

In one embodiment, an index of the reference time unit = [the target value + a configured uplink grant number corresponding to the reference time unit × the number of time units corresponding to the first periodic value] modulo (1024 × a number of consecutive slots per frame × a number of consecutive symbols per slot).

In one embodiment, the number of consecutive symbols per slot is represented by numberOfSymbolsPerSlot.

In one embodiment, the number of consecutive slots per frame is represented by numberOfSlotsPerFrame.

In one embodiment, a said configured downlink assignment number is a non-negative integer for indicating a place of a corresponding configured downlink assignment in a sorting order of configured downlink assignments.

In one embodiment, a said configured downlink assignment number is a positive integer for indicating which configured downlink assignment in sequential order is a corresponding configured downlink assignment.

In one embodiment, a said configured uplink grant number is a non-negative integer for indicating which configured uplink grant in sequential order is a corresponding configured uplink grant.

In one embodiment, a said configured uplink grant number is a positive integer for indicating which configured uplink grant in sequential order is a corresponding configured uplink grant.

In one embodiment, the reference time unit is an earliest time unit among the M2 candidate time units, and the first time unit is different from the reference time unit.

In one embodiment, the M2 candidate time units consist of M2 consecutive time units starting from the reference time unit.

In one embodiment, the M2 candidate time units consist of M2 time units at equal intervals starting from the reference time unit.

In one embodiment, time-domain positions of the M2 candidate time units are obtained by inference based on the reference time unit.

In one embodiment, the reference time unit is a latest time unit among the M2 candidate time units.

In one embodiment, an index of the reference time unit is equal to: [(a fourth value + the target value) + a configured downlink assignment number corresponding to the reference time unit × the number of time units corresponding to the first periodic value] modulo (1024 × a number of consecutive slots per frame).

In one embodiment, the fourth value is equal to a number of consecutive slots per frame multiplied by a starting SFN, the starting SFN being an SFN of a first transmission of a PDSCH where a configured downlink assignment was initialized (or, re-initialized).

In one embodiment, an index of the reference time unit is equal to: [(a fourth value + the target value) + a configured uplink grant number corresponding to the reference time unit × the number of time units corresponding to the first periodic value] modulo (1024 × a number of consecutive slots per frame × a number of consecutive symbols per slot).

In one embodiment, the fourth value is equal to a reference SFN multiplied by a number of consecutive slots per frame multiplied by a number of consecutive symbols per slot plus a time-domain offset value multiplied by the number of consecutive symbols per slot, where the first signaling is used for configuring the reference SFN and the time-domain offset value.

In one embodiment, the fourth value is equal to a starting SFN multiplied by a number of consecutive slots per frame multiplied by a number of consecutive symbols per slot plus a starting slot number multiplied by the number of consecutive symbols per slot, where the starting SFN and the starting slot number are respectively an SFN and a slot number of a first transmission occasion of a PUSCH where a configured uplink grant was initialized (or, re-initialized).

### Embodiment 15

Embodiment 15 illustrates a schematic diagram of a relation between a second signaling and a target value according to one embodiment of the present application, as shown in FIG. 15.

In Embodiment 15, the second signaling in the present application is used to determine the target value in the present application.

In one embodiment, the first node in the present application receives the second signaling.

In one embodiment, the second signaling is a DCI.

In one embodiment, the second signaling is DCI format 0_0, for the specific definition of the DCI format 0_0, refer to 3GPPTS38.212, Chapter 7.3.1.1.

In one embodiment, the second signaling is DCI format 0_1, for the specific definition of the DCI format 0_1, refer to 3GPP TS38.212, Chapter 7.3.1.1.

In one embodiment, the second signaling is DCI format 0_2, for the specific definition of the DCI format 0_2, refer to 3GPPTS38.212, Chapter 7.3.1.1.

In one embodiment, the second signaling is DCI format 1_0, for the specific definition of the DCI format 1_0, refer to 3GPPTS38.212, Chapter 7.3.1.2.

In one embodiment, the second signaling is DCI format 1_1, for the specific definition of the DCI format 1_1, refer to 3GPPTS38.212, Chapter 7.3.1.2.

In one embodiment, the second signaling is DCI format 1_2, for the specific definition of the DCI format 1_2, refer to 3GPPTS38.212, Chapter 7.3.1.2.

In one embodiment, the second signaling comprises one or more fields in a DCI.

In one embodiment, the second signaling is a higher layer signaling.

In one embodiment, the second signaling is an RRC signaling.

In one embodiment, the second signaling comprises one or more fields in an RRC signaling.

In one embodiment, the second signaling comprises one Information Element (IE).

In one embodiment, the second signaling is a MAC CE signaling.

In one embodiment, the second signaling comprises one or more fields in a MAC CE signaling.

In one embodiment, the second signaling is a DownLink Grant Signaling.

In one embodiment, the second signaling is an UpLink Grant Signaling.

In one embodiment, the second signaling is used to indicate M2.

In one embodiment, the second signaling is used to explicitly indicate M2.

In one embodiment, the second signaling is used to implicitly indicate M2.

In one embodiment, the second signaling is used to indicate the target value.

In one embodiment, the second signaling is used to explicitly indicate the target value.

In one embodiment, the second signaling is used to implicitly indicate the target value.

In one embodiment, the target value is equal to a number of consecutive slots per frame multiplied by a starting System Frame Number (SFN) plus a starting slot number, the starting SFN and the starting slot number respectively being an SFN and a slot number of a first transmission of a PDSCH corresponding to initialization (or, re-initialization) of a configured downlink assignment indicated by the second signaling.

In one embodiment, the target value is equal to a slot number of a first transmission of a PDSCH corresponding to initialization (or, re-initialization) of a configured downlink assignment indicated by the second signaling.

In one embodiment, the target value is equal to a starting System Frame Number (SFN) multiplied by a number of consecutive slots per frame multiplied by a number of consecutive symbols per slot plus a starting slot number multiplied by the number of consecutive symbols per slot plus a starting symbol number, where the starting SFN, the starting slot number and the starting symbol number are respectively an SFN, a slot number and a symbol number of a first transmission occasion of a PUSCH corresponding to initialization (or, re-initialization) of a configured uplink grant indicated by the second signaling.

In one embodiment, the target value is equal to a symbol number of a first transmission occasion of a PUSCH corresponding to initialization (or, re-initialization) of a configured uplink grant indicated by the second signaling.

### Embodiment 16

Embodiment 16 illustrates a flowchart of processing of a first node according to one embodiment of the present application, as shown in FIG. 16.

In Embodiment 16, the first node in the present application receives a first signaling in step 1601; and receives a first bit block in a first time unit, or transmits a first bit block in a first time unit in step 1602.

In Embodiment 16, the first signaling is used for determining a first periodic value and M1 candidate Hybrid Automatic Repeat reQuest (HARQ) Process IDs, M1 being greater than 1, the first periodic value being a length of period of a configured assignment, and any of the M1 candidate HARQ Process IDs being a non-negative integer; and the first time unit is one of M2 candidate time units, M2 being a positive integer greater than 1; the first bit block is associated with a first HARQ Process ID, the first HARQ Process ID being one of the M1 candidate HARQ Process IDs; a first value and a second value are used together to determine the first HARQ Process ID from the M1 candidate HARQ Process IDs; a time interval length between any two candidate time units among the M2 candidate time units is no larger than the first periodic value; the first periodic value and M2 are used together to determine the first value; a target value is used to determine the second value, and the target value is related to a time-domain position of the first time unit among the M2 candidate time units.

In one embodiment, the second value is equal to the target value.

In one embodiment, the second value is linear with the target value.

In one embodiment, the second value is equal to the target value minus 1.

In one embodiment, the target value is equal to a sequential order number of the first time unit among the M2 candidate time units.

In one embodiment, according to an order from early to late in time domain, the first time unit is an m-th time unit among the M2 candidate time units, where m is a positive integer no greater than M2; the target value is equal to m.

In one embodiment, according to an order from early to late in time domain, the first time unit is an m-th time unit among the M2 candidate time units, where m is a positive integer greater than 1 and no greater than M2; the target value is equal to m.

In one embodiment, the target value is less than a sequential order number of the first time unit among the M2 candidate time units.

In one embodiment, the target value is equal to a maximum value between {a sequential order number of the first time unit among the M2 candidate time units - 1, 1}.

In one embodiment, a reference time unit is an earliest time unit among the M2 candidate time units, and the first time unit is different from the reference time unit.

In one embodiment, an index of the reference time unit is equal to: a result yielded by a sum of a third value plus a product of a configured downlink assignment number corresponding to the reference time unit and the number of time units corresponding to the first periodic value modulo a product of 1024 times a number of consecutive slots per frame, where the third value is equal to the number of consecutive slots per frame multiplied by a starting SFN plus a starting slot number, the starting SFN and the starting slot number respectively being an SFN and a slot number of a first transmission of a PDSCH where a configured downlink assignment is initialized.

In one embodiment, an index of the reference time unit = [a third value + a configured downlink assignment number corresponding to the reference time unit × the number of time units corresponding to the first periodic value] modulo (1024 × a number of consecutive slots per frame), where the third value = the number of consecutive slots per frame × a starting SFN + a starting slot number, the starting SFN and the starting slot number respectively being an SFN and a slot number of a first transmission of a PDSCH where a configured downlink assignment is initialized.

In one embodiment, an index of the reference time unit = [a third value + a configured uplink grant number corresponding to the reference time unit × the number of time units corresponding to the first periodic value] modulo (1024 × a number of consecutive slots per frame × a number of consecutive symbols per slot).

In one subembodiment, the third value = a reference SFN × a number of consecutive slots per frame × a number of consecutive symbols per slot + a time-domain offset value × the number of consecutive symbols per slot + a reference symbol number, where the first signaling is used for configuring the reference SFN and the time-domain offset value, and another parameter configured by the first signaling is used for inferring the reference symbol number.

In one subembodiment, the third value is equal to a starting SFN × a number of consecutive slots per frame × a number of consecutive symbols per slot + a starting slot number × the number of consecutive symbols per slot + a starting symbol number, where the starting SFN, the starting slot number and the starting symbol number are respectively an SFN, a slot number and a symbol number of a first transmission occasion of a PUSCH where a configured uplink grant is initialized.

In one embodiment, a said configured downlink assignment number is a positive integer for indicating an ordinal position of a corresponding configured downlink assignment.

In one embodiment, a said configured uplink grant number is a positive integer for indicating an ordinal position of a corresponding configured uplink grant.

In one embodiment, a said configured downlink assignment number is a non-negative integer for indicating an ordinal position of a corresponding configured downlink assignment.

In one embodiment, a said configured uplink grant number is a non-negative integer for indicating an ordinal position of a corresponding configured uplink grant.

In one embodiment, the M2 candidate time units consist of M2 consecutive time units starting from the reference time unit.

In one embodiment, the M2 candidate time units consist of M2 time units at equal intervals starting from the reference time unit.

### Embodiment 17

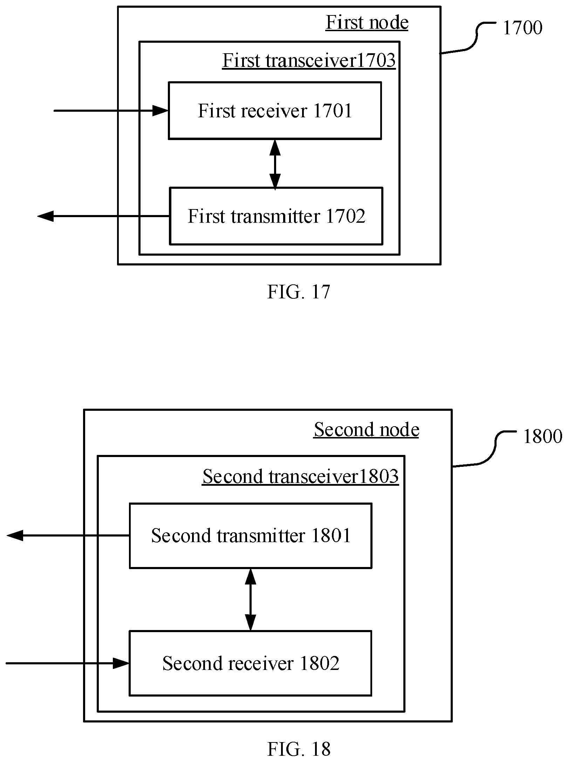

Embodiment 17 illustrates a structure block diagram a processing device in a first node, as shown in FIG. 17. In FIG. 17, the first node's processing device 1700 comprises a first transceiver 1703, the first transceiver 1703 comprising a first receiver 1701 and a first transmitter 1702.

In one embodiment, the first node 1700 is a UE.

In one embodiment, the first node 1700 is a relay node.

In one embodiment, the first node 1700 is vehicle-mounted communication equipment.

In one embodiment, the first node 1700 is a UE supporting V2X communications.

In one embodiment, the first node 1700 is a relay node supporting V2X communications.

In one embodiment, the first receiver 1701 comprises at least one of the antenna 452, the receiver 454, the multi-antenna receiving processor 458, the receiving processor 456, the controller/processor 459, the memory 460 or the data source 467 in FIG. 4 of the present application.

In one embodiment, the first receiver 1701 comprises at least the first five of the antenna 452, the receiver 454, the multi-antenna receiving processor 458, the receiving processor 456, the controller/processor 459, the memory 460 and the data source 467 in FIG. 4 of the present application.

In one embodiment, the first receiver 1701 comprises at least the first four of the antenna 452, the receiver 454, the multi-antenna receiving processor 458, the receiving processor 456, the controller/processor 459, the memory 460 and the data source 467 in FIG. 4 of the present application.

In one embodiment, the first receiver 1701 comprises at least the first three of the antenna 452, the receiver 454, the multi-antenna receiving processor 458, the receiving processor 456, the controller/processor 459, the memory 460 and the data source 467 in FIG. 4 of the present application.

In one embodiment, the first receiver 1701 comprises at least the first two of the antenna 452, the receiver 454, the multi-antenna receiving processor 458, the receiving processor 456, the controller/processor 459, the memory 460 and the data source 467 in FIG. 4 of the present application.

In one embodiment, the first transmitter 1702 comprises at least one of the antenna 452, the transmitter 454, the multi-antenna transmitting processor 457, the transmitting processor 468, the controller/processor 459, the memory 460 or the data source 467 in FIG. 4 of the present application.

In one embodiment, the first transmitter 1702 comprises at least the first five of the antenna 452, the transmitter 454, the multi-antenna transmitting processor 457, the transmitting processor 468, the controller/processor 459, the memory 460 and the data source 467 in FIG. 4 of the present application.

In one embodiment, the first transmitter 1702 comprises at least the first four of the antenna 452, the transmitter 454, the multi-antenna transmitting processor 457, the transmitting processor 468, the controller/processor 459, the memory 460 and the data source 467 in FIG. 4 of the present application.

In one embodiment, the first transmitter 1702 comprises at least the first three of the antenna 452, the transmitter 454, the multi-antenna transmitting processor 457, the transmitting processor 468, the controller/processor 459 the memory 460 and the data source 467 in FIG. 4 of the present application.

In one embodiment, the first transmitter 1702 comprises at least the first two of the antenna 452, the transmitter 454, the multi-antenna transmitting processor 457, the transmitting processor 468, the controller/processor 459, the memory 460 and the data source 467 in FIG. 4 of the present application.

In one embodiment, the first receiver 1701 receives a first signaling, the first signaling used for determining a first periodic value and M1 candidate Hybrid Automatic Repeat reQuest (HARQ) Process IDs, M1 being greater than 1, the first periodic value being a length of period of a configured assignment, and any of the M1 candidate HARQ Process IDs being a non-negative integer; and the first receiver 1701 receives a first bit block in a first time unit, or, the first transmitter 1702 transmits a first bit block in a first time unit, the first time unit being one of M2 candidate time units, M2 being a positive integer greater than 1; herein, the first bit block is associated with a first HARQ Process ID, the first HARQ Process ID being one of the M1 candidate HARQ Process IDs; a first value and a second value are used together to determine the first HARQ Process ID from the M1 candidate HARQ Process IDs; a time interval length between any two candidate time units among the M2 candidate time units is no larger than the first periodic value; the first periodic value and M2 are used together to determine the first value; an index of the first time unit and a target value are used together to determine the second value, and the target value is used to determine time-domain positions of the M2 candidate time units.

In one embodiment, the first HARQ Process ID is related to a result yielded by a sum of the first value and the second value modulo M1.

In one embodiment, the first value is equal to a product of a value related to a number of time units corresponding to the first periodic value times M2.

In one embodiment, the second value is related to a difference between the index of the first time unit and the target value.

In one embodiment, the second value is equal to a result yielded by a value related to the index of the first time unit divided by the target value.

In one embodiment, a reference time unit is one of the M2 candidate time units, and the target value is used to determine an index of the reference time unit.

In one embodiment, the first receiver 1701 receives a second signaling; herein, the second signaling is used to determine the target value.

In one embodiment, the first receiver 1701 receives a first signaling, the first signaling used for determining a first periodic value and M1 candidate Hybrid Automatic Repeat reQuest (HARQ) Process IDs, M1 being greater than 1, the first periodic value being a length of period of a configured assignment, and any of the M1 candidate HARQ Process IDs being a non-negative integer; and the first receiver 1701 receives a first bit block in a first time unit, or, the first transmitter 1702 transmits a first bit block in a first time unit, the first time unit being one of M2 candidate time units, M2 being a positive integer greater than 1; herein, the first bit block is associated with a first HARQ Process ID, the first HARQ Process ID being one of the M1 candidate HARQ Process IDs; the first HARQ Process ID is related to a sum of the first value and the second value; a time interval length between any two candidate time units among the M2 candidate time units is no larger than the first periodic value; the first value is equal to a product of a value related to a number of time units corresponding to the first periodic value times M2; the second value is related to a difference between the index of the first time unit and the target value, or, the second value is equal to a result yielded by a value related to the index of the first time unit divided by the target value; a reference time unit is one of the M2 candidate time units, and the target value is used to determine an index of the reference time unit, the M2 candidate time units consisting of M2 time units starting from the reference time unit that are consecutive or at equal intervals.

In one subembodiment, the first HARQ Process ID is equal to a result yielded by a sum of the first value and the second value modulo M1; or, the first HARQ Process ID is equal to a result yielded by a sum of the first value and the second value modulo M1 plus a first offset value, where the first signaling is used to determine the first offset value.

In one subembodiment, the first value is equal to a largest non-negative integer no greater than the ratio of the index of the first time unit to the number of the time units corresponding to the first periodic value being multiplied by M2.

In one subembodiment, the second value is equal to a result yielded by a difference of the index of the first time unit minus the target value modulo the number of time units corresponding to the first periodic value; or, the second value is equal to a result yielded by a difference of the index of the first time unit minus the target value modulo the number of time units corresponding to the first periodic value further divided by a first time interval, the first time interval being a positive integer greater than 1.

In one subembodiment, the second value is equal to a result yielded by the index of the first time unit being subtracted by a sum of a fourth value and the target value modulo the number of time units corresponding to the first periodic value, where the fourth value is equal to a number of consecutive slots per frame multiplied by a starting System Frame Number (SFN), the starting SFN being an SFN of a first transmission of a PDSCH where a configured downlink assignment was initialized (or, re-initialized); or, the second value is equal to a result yielded by the index of the first time unit being subtracted by a sum of a fourth value and the target value modulo the number of time units corresponding to the first periodic value further being divided by a first time interval, where the fourth value is equal to a number of consecutive slots per frame multiplied by a starting System Frame Number (SFN), the starting SFN being an SFN of a first transmission of a PDSCH where a configured downlink assignment was initialized (or, re-initialized), and the first time interval is a positive integer greater than 1.

In one subembodiment, the second value is equal to a result yielded by a difference of the index of the first time unit minus a third value modulo the number of time units corresponding to the first periodic value being further divided by the target value, the third value being a non-negative integer.

In one subembodiment, an index of the reference time unit is equal to: a result yielded by a sum of the target value plus a product of a configured downlink assignment number corresponding to the reference time unit and the number of time units corresponding to the first periodic value modulo a product of 1024 times a number of consecutive slots per frame.

In one embodiment, the first receiver 1701 receives a first signaling, the first signaling used for determining a first periodic value and M1 candidate Hybrid Automatic Repeat reQuest (HARQ) Process IDs, M1 being greater than 1, the first periodic value being a length of period of a configured assignment, and any of the M1 candidate HARQ Process IDs being a non-negative integer; and the first receiver 1701 receives a first bit block in a first time unit, or, the first transmitter 1702 transmits a first bit block in a first time unit, the first time unit being one of M2 candidate time units, M2 being a positive integer greater than 1; herein, the first bit block is associated with a first HARQ Process ID, the first HARQ Process ID being one of the M1 candidate HARQ Process IDs; a first value and a second value are used together to determine the first HARQ Process ID from the M1 candidate HARQ Process IDs; a time interval length between any two candidate time units among the M2 candidate time units is no larger than the first periodic value; the first periodic value and M2 are used together to determine the first value; a target value is used to determine the second value, and the target value is related to a time-domain position of the first time unit among the M2 candidate time units.

In one embodiment, the first receiver 1701 receives a first signaling, the first signaling used for determining a first periodic value and M1 candidate Hybrid Automatic Repeat reQuest (HARQ) Process IDs, M1 being greater than 1, the first periodic value being a length of period of a configured assignment, and any of the M1 candidate HARQ Process IDs being a non-negative integer; and the first receiver 1701 receives a first bit block in a first time unit, or, the first transmitter 1702 transmits a first bit block in a first time unit, the first time unit being one of M2 candidate time units, M2 being a positive integer greater than 1; herein, the first bit block is associated with a first HARQ Process ID, the first HARQ Process ID being one of the M1 candidate HARQ Process IDs; the first HARQ Process ID is related to a sum of the first value and the second value; a time interval length between any two candidate time units among the M2 candidate time units is no larger than the first periodic value; the first value is equal to a product of a value related to a number of time units corresponding to the first periodic value times M2; the second value is linear with a target value, and the target value is related to a time-domain position of the first time unit among the M2 candidate time units.

In one subembodiment, the first HARQ Process ID is equal to a result yielded by a sum of the first value and the second value modulo M1; or, the first HARQ Process ID is equal to a result yielded by a sum of the first value and the second value modulo M1 plus a first offset value, where the first signaling is used to determine the first offset value.

In one subembodiment, the first value is equal to a largest non-negative integer no greater than the ratio of the index of the first time unit to the number of the time units corresponding to the first periodic value being multiplied by M2.

In one subembodiment, the second value is equal to the target value, or, the second value is equal to the target value minus 1.

In one subembodiment, according to an order from early in time domain to late in time domain, the first time unit is an m-th time unit among the M2 candidate time units, where m is a positive integer greater than 1 and no greater than M2; the target value is equal to m.

### Embodiment 18

Embodiment 18 illustrates a structure block diagram of a processing device in a second node, as shown in FIG. 18. In FIG. 18, a second node's processing device 1800 comprises a second transceiver 1803, the second transceiver comprising a second transmitter 1801 and a second receiver 1802.

In one embodiment, the second node 1800 is a UE.

In one embodiment, the second node 1800 is a base station.

In one embodiment, the second node 1800 is a relay node.

In one embodiment, the second node 1800 is vehicle-mounted communication equipment.

In one embodiment, the second node 1800 is UE supporting V2X communications.

In one embodiment, the second transmitter 1801 comprises at least one of the antenna 420, the transmitter 418, the multi-antenna transmitting processor 471, the transmitting processor 416, the controller/processor 475 or the memory 476 in FIG. 4 of the present application.

In one embodiment, the second transmitter 1801 comprises at least the first five of the antenna 420, the transmitter 418, the multi-antenna transmitting processor 471, the transmitting processor 416, the controller/processor 475 and the memory 476 in FIG. 4 of the present application.

In one embodiment, the second transmitter 1801 comprises at least the first four of the antenna 420, the transmitter 418, the multi-antenna transmitting processor 471, the transmitting processor 416, the controller/processor 475 and the memory 476 in FIG. 4 of the present application.

In one embodiment, the second transmitter 1801 comprises at least the first three of the antenna 420, the transmitter 418, the multi-antenna transmitting processor 471, the transmitting processor 416, the controller/processor 475 and the memory 476 in FIG. 4 of the present application.

In one embodiment, the second transmitter 1801 comprises at least the first two of the antenna 420, the transmitter 418, the multi-antenna transmitting processor 471, the transmitting processor 416, the controller/processor 475 and the memory 476 in FIG. 4 of the present application.

In one embodiment, the second receiver 1802 comprises at least one of the antenna 420, the receiver 418, the multi-antenna receiving processor 472, the receiving processor 470, the controller/processor 475 or the memory 476 in FIG. 4 of the present application.

In one embodiment, the second receiver 1802 comprises at least the first five of the antenna 420, the receiver 418, the multi-antenna receiving processor 472, the receiving processor 470, the controller/processor 475 and the memory 476 in FIG. 4 of the present application.

In one embodiment, the second receiver 1802 comprises at least the first four of the antenna 420, the receiver 418, the multi-antenna receiving processor 472, the receiving processor 470, the controller/processor 475 and the memory 476 in FIG. 4 of the present application.

In one embodiment, the second receiver 1802 comprises at least the first three of the antenna 420, the receiver 418, the multi-antenna receiving processor 472, the receiving processor 470, the controller/processor 475 and the memory 476 in FIG. 4 of the present application.

In one embodiment, the second receiver 1802 comprises at least the first two of the antenna 420, the receiver 418, the multi-antenna receiving processor 472, the receiving processor 470, the controller/processor 475 and the memory 476 in FIG. 4 of the present application.

In one embodiment, the second transmitter 1801 transmits a first signaling, the first signaling used for determining a first periodic value and M1 candidate Hybrid Automatic Repeat reQuest (HARQ) Process IDs, M1 being greater than 1, the first periodic value being a length of period of a configured assignment, and any of the M1 candidate HARQ Process IDs being a non-negative integer; the second transmitter 1801 transmits a first bit block in a first time unit, or, the second receiver 1802 receives a first bit block in a first time unit, the first time unit being one of M2 candidate time units, M2 being a positive integer greater than 1; herein, the first bit block is associated with a first HARQ Process ID, the first HARQ Process ID being one of the M1 candidate HARQ Process IDs; a first value and a second value are used together to determine the first HARQ Process ID from the M1 candidate HARQ Process IDs; a time interval length between any two candidate time units among the M2 candidate time units is no larger than the first periodic value; the first periodic value and M2 are used together to determine the first value; an index of the first time unit and a target value are used together to determine the second value, and the target value is used to determine time-domain positions of the M2 candidate time units.

In one embodiment, the first HARQ Process ID is related to a result yielded by a sum of the first value and the second value modulo M1.

In one embodiment, the first value is equal to a product of a value related to a number of time units corresponding to the first periodic value times M2.

In one embodiment, the second value is related to a difference between the index of the first time unit and the target value.

In one embodiment, the second value is equal to a result yielded by a value related to the index of the first time unit divided by the target value.

In one embodiment, a reference time unit is one of the M2 candidate time units, and the target value is used to determine an index of the reference time unit.

In one embodiment, the second transmitter 1801 transmits a second signaling; herein, the second signaling is used to determine the target value.

In one embodiment, the second transmitter 1801 transmits a first signaling, the first signaling used for determining a first periodic value and M1 candidate Hybrid Automatic Repeat reQuest (HARQ) Process IDs, M1 being greater than 1, the first periodic value being a length of period of a configured assignment, and any of the M1 candidate HARQ Process IDs being a non-negative integer; the second transmitter 1801 transmits a first bit block in a first time unit, or, the second receiver 1802 receives a first bit block in a first time unit, the first time unit being one of M2 candidate time units, M2 being a positive integer greater than 1; herein, the first bit block is associated with a first HARQ Process ID, the first HARQ Process ID being one of the M1 candidate HARQ Process IDs; a first value and a second value are used together to determine the first HARQ Process ID from the M1 candidate HARQ Process IDs; a time interval length between any two candidate time units among the M2 candidate time units is no larger than the first periodic value; the first periodic value and M2 are used together to determine the first value; a target value is used to determine the second value, and the target value is related to a time-domain position of the first time unit among the M2 candidate time units.

The ordinary skill in the art may understand that all or part of steps in the above method may be implemented by instructing related hardware through a program. The program may be stored in a computer readable storage medium, for example Read-Only-Memory (ROM), hard disk or compact disc, etc. Optionally, all or part of steps in the above embodiments also may be implemented by one or more integrated circuits. Correspondingly, each module unit in the above embodiment may be realized in the form of hardware, or in the form of software function modules. The present application is not limited to any combination of hardware and software in specific forms. The first node in the present application includes but is not limited to mobile phones, tablet computers, notebooks, network cards, low-consumption equipment, enhanced MTC (eMTC) terminals, NB-IOT terminals, vehicle-mounted communication equipment, aircrafts, airplanes, unmanned aerial vehicles, telecontrolled aircrafts, etc. The second node in the present application includes but is not limited to mobile phones, tablet computers, notebooks, network cards, low-consumption equipment, enhanced MTC (eMTC) terminals, NB-IOT terminals, vehicle-mounted communication equipment, aircrafts, airplanes, unmanned aerial vehicles, telecontrolled aircrafts, etc. The UE or terminal in the present application includes but is not limited to mobile phones, tablet computers, notebooks, network cards, low-consumption equipment, enhanced MTC (eMTC) terminals, NB-IOT terminals, vehicle-mounted communication equipment, aircrafts, airplanes, unmanned aerial vehicles, telecontrolled aircrafts, etc. The base station in the present application includes but is not limited to macro-cellular base stations, micro-cellular base stations, home base stations, relay base station, eNB, gNB, Transmitter Receiver Point (TRP), GNSS, relay satellite, satellite base station, airborne base station, test apparatus, test equipment or test instrument, and other radio communication equipment.

It will be appreciated by those skilled in the art that this disclosure can be implemented in other designated forms without departing from the core features or fundamental characters thereof. The currently disclosed embodiments, in any case, are therefore to be regarded only in an illustrative, rather than a restrictive sense. The scope of invention shall be determined by the claims attached, rather than according to previous descriptions, and all changes made with equivalent meaning are intended to be included therein.

## Claims

1. A first node for wireless communications, **characterized in** comprising:
a first receiver, which receives a first signaling, the first signaling used for determining a first periodic value and M1 candidate Hybrid Automatic Repeat reQuest (HARQ) Process IDs, the first periodic value being a length of period of a configured assignment, and any of the M1 candidate HARQ Process IDs being a non-negative integer; and
a first transceiver, which receives a first bit block in a first time unit, or, which transmits a first bit block in a first time unit, the first time unit being one of M2 candidate time units, M2 being a positive integer greater than 1;
wherein the first bit block is associated with a first HARQ Process ID, the first HARQ Process ID being one of the M1 candidate HARQ Process IDs; a first value and a second value are used together to determine the first HARQ Process ID from the M1 candidate HARQ Process IDs; a time interval length between any two candidate time units among the M2 candidate time units is no larger than the first periodic value; the first periodic value and M2 are used together to determine the first value; an index of the first time unit and a target value are used together to determine the second value, and the target value is used to determine time-domain positions of the M2 candidate time units, or, a target value is used to determine the second value, and the target value is related to a time-domain position of the first time unit among the M2 candidate time units.

2. The first node according to claim 1, **characterized in that** the first HARQ Process ID is equal to a result yielded by a sum of the first value and the second value modulo M1.

3. The first node according to claim 1 or 2, **characterized in that** the first value is equal to a product of a value related to a number of time units corresponding to the first periodic value times M2.

4. The first node according to any of claims 1-3, **characterized in that** the second value is related to a difference between the index of the first time unit and the target value.

5. The first node according to any of claims 1-3, **characterized in that** the second value is equal to a result yielded by a value related to the index of the first time unit divided by the target value.

6. The first node according to any of claims 1-5, **characterized in that** a reference time unit is one of the M2 candidate time units, and the target value is used to determine an index of the reference time unit.

7. The first node according to any of claims 1-6, **characterized in** comprising:
the first receiver, which receives a second signaling;
wherein the second signaling is used to determine the target value.

8. A second node for wireless communications, **characterized in** comprising:
a second transmitter, which transmits a first signaling, the first signaling used for determining a first periodic value and M1 candidate Hybrid Automatic Repeat reQuest (HARQ) Process IDs, the first periodic value being a length of period of a configured assignment, and any of the M1 candidate HARQ Process IDs being a non-negative integer; and
a second transceiver, which transmits a first bit block in a first time unit, or, which receives a first bit block in a first time unit, the first time unit being one of M2 candidate time units, M2 being a positive integer greater than 1;
wherein the first bit block is associated with a first HARQ Process ID, the first HARQ Process ID being one of the M1 candidate HARQ Process IDs; a first value and a second value are used together to determine the first HARQ Process ID from the M1 candidate HARQ Process IDs; a time interval length between any two candidate time units among the M2 candidate time units is no larger than the first periodic value; the first periodic value and M2 are used together to determine the first value; an index of the first time unit and a target value are used together to determine the second value, and the target value is used to determine time-domain positions of the M2 candidate time units, or, a target value is used to determine the second value, and the target value is related to a time-domain position of the first time unit among the M2 candidate time units.

9. The second node according to claim 8, **characterized in that** the first HARQ Process ID is equal to a result yielded by a sum of the first value and the second value modulo M1.

10. The second node according to claim 8 or 9, **characterized in that** the first value is equal to a product of a value related to a number of time units corresponding to the first periodic value times M2.

11. The second node according to any of claims 8-10, **characterized in that** the second value is related to a difference between the index of the first time unit and the target value.

12. The second node according to any of claims 8-10, **characterized in that** the second value is equal to a result yielded by a value related to the index of the first time unit divided by the target value.

13. The second node according to any of claims 8-12, **characterized in that** a reference time unit is one of the M2 candidate time units, and the target value is used to determine an index of the reference time unit.

14. The second node according to any of claims 8-13, **characterized in** comprising:
the second transmitter, which transmits a second signaling;
wherein the second signaling is used to determine the target value.

15. A method in a first node for wireless communications, **characterized in** comprising:
receiving a first signaling, the first signaling used for determining a first periodic value and M1 candidate Hybrid Automatic Repeat reQuest (HARQ) Process IDs, the first periodic value being a length of period of a configured assignment, and any of the M1 candidate HARQ Process IDs being a non-negative integer; and
receiving a first bit block in a first time unit, or, transmitting a first bit block in a first time unit, the first time unit being one of M2 candidate time units, M2 being a positive integer greater than 1;
wherein the first bit block is associated with a first HARQ Process ID, the first HARQ Process ID being one of the M1 candidate HARQ Process IDs; a first value and a second value are used together to determine the first HARQ Process ID from the M1 candidate HARQ Process IDs; a time interval length between any two candidate time units among the M2 candidate time units is no larger than the first periodic value; the first periodic value and M2 are used together to determine the first value; an index of the first time unit and a target value are used together to determine the second value, and the target value is used to determine time-domain positions of the M2 candidate time units, or, a target value is used to determine the second value, and the target value is related to a time-domain position of the first time unit among the M2 candidate time units.

16. The method in the first node according to claim 15, **characterized in that** the first HARQ Process ID is equal to a result yielded by a sum of the first value and the second value modulo M1.

17. The method in the first node according to claim 15 or 16, **characterized in that** the first value is equal to a product of a value related to a number of time units corresponding to the first periodic value times M2.

18. The method in the first node according to any of claims 15-17, **characterized in that** the second value is related to a difference between the index of the first time unit and the target value.

19. The method in the first node according to any of claims 15-17, **characterized in that** the second value is equal to a result yielded by a value related to the index of the first time unit divided by the target value.

20. The method in the first node according to any of claims 15-19, **characterized in that** a reference time unit is one of the M2 candidate time units, and the target value is used to determine an index of the reference time unit.

21. The method in the first node according to any of claims 15-20, **characterized in** comprising:
receiving a second signaling;
wherein the second signaling is used to determine the target value.

22. A method in a second node for wireless communications, **characterized in** comprising:
transmitting a first signaling, the first signaling used for determining a first periodic value and M1 candidate Hybrid Automatic Repeat reQuest (HARQ) Process IDs, the first periodic value being a length of period of a configured assignment, and any of the M1 candidate HARQ Process IDs being a non-negative integer; and
transmitting a first bit block in a first time unit, or, receiving a first bit block in a first time unit, the first time unit being one of M2 candidate time units, M2 being a positive integer greater than 1;
wherein the first bit block is associated with a first HARQ Process ID, the first HARQ Process ID being one of the M1 candidate HARQ Process IDs; a first value and a second value are used together to determine the first HARQ Process ID from the M1 candidate HARQ Process IDs; a time interval length between any two candidate time units among the M2 candidate time units is no larger than the first periodic value; the first periodic value and M2 are used together to determine the first value; an index of the first time unit and a target value are used together to determine the second value, and the target value is used to determine time-domain positions of the M2 candidate time units, or, a target value is used to determine the second value, and the target value is related to a time-domain position of the first time unit among the M2 candidate time units.

23. The method in the second node according to claim 22, **characterized in that** the first HARQ Process ID is equal to a result yielded by a sum of the first value and the second value modulo M1.

24. The method in the second node according to claim 22 or 23, **characterized in that** the first value is equal to a product of a value related to a number of time units corresponding to the first periodic value times M2.

25. The method in the second node according to any of claims 22-24, **characterized in that** the second value is related to a difference between the index of the first time unit and the target value.

26. The method in the second node according to any of claims 22-24, **characterized in that** the second value is equal to a result yielded by a value related to the index of the first time unit divided by the target value.

27. The method in the second node according to any of claims 22-26, **characterized in that** a reference time unit is one of the M2 candidate time units, and the target value is used to determine an index of the reference time unit.

28. The method in the second node according to any of claims 22-27, **characterized in** comprising:
transmitting a second signaling;
wherein the second signaling is used to determine the target value.
